# EUROPEAN PATENT SPECIFICATION

(11) **EP 4 178 296 B1**
(45) Date of publication and mention of the grant of the patent: **02.12.2026**
(21) Application number: 21846711.6
(22) Date of filing: 14.07.2021
(51) Int. Cl.: H04W 74/08, H04W 74/00

(54) **UPLINK CARRIER SWITCHING DURING A RANDOM ACCESS PROCEDURE**
UMSCHALTUNG DES UPLINK-TRÄGERS WÄHREND EINES RANDOM ACCESS-VORGANGS
COMMUTATION DE PORTEUSE EN LIAISON MONTANTE AU COURS D'UN PROCESSUS DE RANDOM ACCESS

(30) Priority: 24.07.2020 CN 202010722522
(43) Date of publication of application: 10.05.2023
(73) Proprietor: Huawei Technologies Co., Ltd., Shenzhen, Guangdong 518129 (CN)
(72) Inventor: HU, Dan, Shenzhen, Guangdong 518129 (CN); ZHANG, Xu, Shenzhen, Guangdong 518129 (CN); QU, Bingyu, Shenzhen, Guangdong 518129 (CN); WANG, Feng, Shenzhen, Guangdong 518129 (CN)
(74) Representative: Isarpatent
(86) International application number: PCT/CN2021/106230
(87) International publication number: WO 2022/017232

(56) References cited:
- WO-A1-2019/096312
- CN-A- 109 392 129
- CN-A- 109 803 340
- CN-A- 111 294 931
- US-A1- 2018 376 510
- US-A1- 2020 037 361
- "3rd Generation Partnership Project; Technical Specification Group Radio Access Network; NR; Physical layer procedures for control (Release 16)", vol. RAN WG1, no. V16.2.0, 20 July 2020 (2020-07-20), pages 1 - 176, XP051925548, Retrieved from the Internet <URL:ftp://ftp.3gpp.org/Specs/archive/38_series/38.213/38213-g20.zip 38213-g20.docx> [retrieved on 20200720]
- CATT: "Further details on NR 4-step RA Procedure", vol. RAN WG1, no. Athens, Greece; 20180226 - 20180302, 17 February 2018 (2018-02-17), XP051397693, Retrieved from the Internet <URL:http://www.3gpp.org/ftp/tsg%5Fran/WG1%5FRL1/TSGR1%5F92/Docs/> [retrieved on 20180217]
- ERICSSON: "Support of DL quality report in connected mode in NB-IoT", 3GPP DRAFT; R1-1813588 SUPPORT OF DL QUALITY REPORT IN CONNECTED MODE IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Spokane, USA; 20181112 - 20181116, 11 November 2018 (2018-11-11), Mobile Competence Centre ; 650, route des Lucioles ; F-06921 Sophia-Antipolis Cedex ; France , XP051555644
- HUAWEI, HISILICON: "Msg3 quality reporting for non-anchor access", 3GPP DRAFT; R1-1812137, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Spokane, USA; 20181112 - 20181116, 11 November 2018 (2018-11-11), Mobile Competence Centre ; 650, route des Lucioles ; F-06921 Sophia-Antipolis Cedex ; France , XP051553978

## Description

### TECHNICAL FIELD

This disclosure relates to the field of communication technologies, and in particular, the invention relates to an information sending method and apparatus, and an information receiving method and apparatus.

### BACKGROUND

The International Telecommunication Union (International Telecommunication Union, ITU) defines three application scenarios for fifth-generation mobile communication system new radio (5G new radio, 5G NR) and a future mobile communication system: enhanced mobile broadband (enhanced mobile broadband, eMBB), ultra-reliable low-latency communication (ultra-reliable low-latency communication, URLLC), and massive machine-type communications (massive machine-type communications, mMTC). These services have increasingly higher requirements on a data transmission amount, a transmission rate, a latency, and the like.

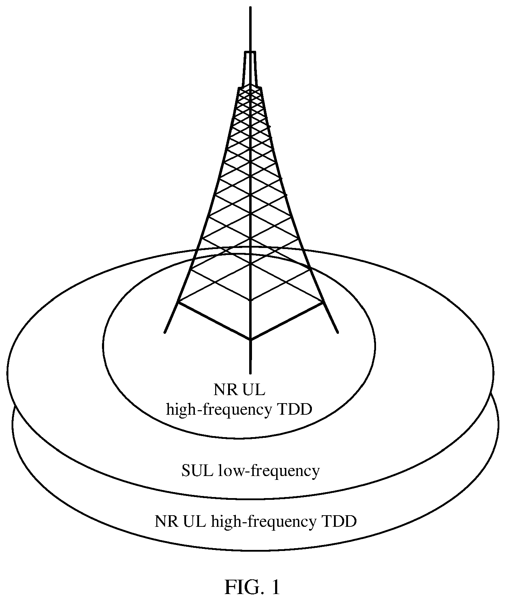

To enhance uplink coverage and increase an uplink capacity, a supplementary uplink carrier (supplementary uplink carrier, SUL carrier) is introduced into the 5G NR. As shown in FIG. 1, a cell covered by a radio signal of a base station includes one time division duplex (time division duplex, TDD) downlink carrier (downlink carrier, DL carrier) and two uplink carriers (uplink carriers, UL carriers), namely, a normal uplink carrier (normal uplink carrier, NUL carrier) and a SUL carrier. A frequency of the NUL carrier is high, a penetration loss and a distance loss of signal transmission are larger, and uplink coverage of the NUL carrier is smaller than downlink coverage, which reduces a success rate of accessing a cell by a terminal device at a cell edge. A frequency of the SUL carrier is low, and the SUL carrier can supplement the uplink coverage of the NUL carrier to some extent. The terminal device chooses to perform random access on the NUL carrier or the SUL carrier.

Currently, in the 5G NR, the terminal device selects the NUL carrier or the SUL carrier by determining through comparison a value relationship between an RSRP measurement value obtained through measurement and a preconfigured RSRP threshold. As a result, a plurality of terminal devices select a same uplink carrier to perform random access. When uplink resources are limited and there are a large quantity of terminal devices, a part of terminal devices fail in access. In evolution of future communication technologies, how to resolve a problem that a part of terminal devices fail in access because uplink resources are limited and there are a large quantity of terminal devices is still an important problem that urgently needs to be resolved.
US 2020/037361 A1 relates to wireless communication systems aiming at improving the performance of random-access procedures through the application of Listen-Before-Talk (LBT) modes.
US 2018/376510 A1 relates to techniques and apparatuses for managing supplementary uplink (SUL) configurations in wireless communication systems.
3rd Generation Partnership Project; Technical Specification Group Radio Access Network; NR; Physical layer procedures for control (Release 16)", vol. RAN WG1, no. V16.2.0, (20200720), pages 1 - 176, 3GPP STANDARD; TECHNICAL SPECIFICATION; 3GPP TS 38.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE is a 3GPP document related to Physical layer procedures for control.
CATT, "Further details on NR 4-step RA Procedure", vol. RAN WG1, no. Athens, Greece; 20180226 - 20180302, (20180217), 3GPP DRAFT; R1-1801712 PRACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, relates to NR 4-step RA Procedure.

### SUMMARY

The object of the present invention is to provide an information sending method and apparatus, and an information receiving method and apparatus, to help resolve a problem that a part of terminal devices fail in access because uplink resources are limited and there are a large quantity of terminal devices. This object is solved by the attached independent claims and further embodiments and improvements of the invention are listed in the attached dependent claims. Hereinafter, up to the "brief description of the drawings", expressions like "... aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

According to a first aspect according to the invention, an embodiment of this application provides an information sending method. The method includes: A terminal device sends a random access preamble on a first uplink carrier; the terminal device receives first information, where the first information includes carrier indication information, the carrier indication information indicates a second uplink carrier used by a message 3 in a random access process, and the second uplink carrier is different from the first uplink carrier; and the terminal device sends the message 3 on the second uplink carrier.

The foregoing design may be applied to a contention-based random access (contention-based random access, CBRA) process. The message 3 is the 3^{rd} message in the random access process. The message 3 may also be different based on different statuses of the terminal device and different application scenarios. For example, when the terminal device is in an RRC idle mode and performs initial access, the message 3 is an RRCSetupRequest message; when the terminal device is in an RRC active mode and needs to resume access, the message 3 is an RRCRRequest message; or when the terminal device needs to re-establish RRC, the message 3 is an RRCReestablishmentRequest message. Details are not described herein.

Based on this design, the terminal device can switch an uplink carrier in the random access process, to reduce load of the first uplink carrier for sending the random access preamble, and resolve, as much as possible, a problem that load of the first uplink carrier is heavy. In addition, if the first uplink carrier that is selected by the terminal device and that is for sending the random access preamble is subject to severe interference or channel quality is poor, the terminal device is allowed to switch a carrier in the random access process, so that excessive retransmission of the message 3 can be avoided to some extent, to reduce a network transmission latency. In addition, the message 3 sent by the terminal device in the random access process is allowed to switch an uplink carrier, so that more resources can be allocated to the terminal, to help implement fast access of the terminal device.

In an optional implementation, the first information is downlink control information DCI, and a format of the DCI is 0_0.

Based on this design, the terminal device can obtain the carrier indication information in the DCI format 0_0 for scheduling retransmission of the message 3, to resend the message 3 based on the carrier indication. Based on the carrier indication information, the second uplink carrier for retransmitting the message 3 may be different from the first uplink carrier for sending the random access preamble. This helps reduce load of the first uplink carrier, or when the first uplink carrier is subject to severe interference and channel quality is poor, switching uplink carrier helps avoid a problem of a network transmission latency caused by excessive retransmission of the message 3.

In an optional implementation, the first information is a random access response uplink grant.

Based on this design, the terminal device can obtain the carrier indication information in the random access response uplink grant for initially transmitting the message 3, to initially send the message 3 based on the carrier indication. Based on the carrier indication information, the second uplink carrier for initially transmitting the message 3 may be different from the first uplink carrier for sending the random access preamble. This helps reduce load of the first uplink carrier, or when the first uplink carrier is subject to severe interference and channel quality is poor, switching uplink carrier helps avoid a problem of a network transmission latency caused by retransmission of the message 3 because the message 3 cannot be correctly received by a network device.

In an optional implementation, before the terminal device receives first information, the method further includes: The terminal device sends previous transmission of the message 3 on a third uplink carrier, where the third uplink carrier is different from the first uplink carrier and/or the second uplink carrier.

Based on this design, the terminal device can send the message 3 on the third uplink carrier, and the third uplink carrier may be different from the first uplink carrier and/or the second uplink carrier. This helps reduce load of the first uplink carrier, or when the first uplink carrier is subject to severe interference and channel quality is poor, switching uplink carrier helps avoid a problem of a network transmission latency caused by retransmission of the message 3 because the message 3 cannot be correctly received by the network device.

In an optional implementation, before the terminal device receives first information, the method further includes: The terminal device receives a random access response uplink grant, where the random access response uplink grant indicates the terminal device to send the message 3 on a third uplink carrier, and the third uplink carrier is different from the first uplink carrier and/or the second uplink carrier.

Based on this design, the terminal device may receive the random access response uplink grant, and send the message 3 on the third uplink carrier based on an indication of the random access response uplink grant. The third uplink carrier may be different from the first uplink carrier and/or the second uplink carrier. Switching uplink carrier helps reduce load of the first uplink carrier. In addition, when the first uplink carrier is subject to severe interference and channel quality is poor, switching uplink carrier helps avoid a problem of a network transmission latency caused because the message 3 cannot be correctly received by the network device.

In an optional implementation, the first information is the downlink control information DCI, and the carrier indication information is the last m valid bits in the DCI format 0_0, where m is a positive integer, and m≥2; or the carrier indication information is the last n^{th} to (n-m)^{th} valid bits in the DCI format 0_0, where n≥2, m≥1, n>m, and n and m are positive integers. The valid bits do not include a zero filling bit in the DCI.

Based on this design, the carrier indication information is configured at different bit locations in the DCI format 0_0 of the downlink control information DCI, so that the terminal device can obtain the carrier indication information from the DCI in a corresponding reading manner, and further can transmit the message 3 in the random access process on a corresponding uplink carrier based on the carrier indication information. It should be understood that when the terminal device is not indicated to switch an uplink carrier in the random access process, the carrier indication information may also be configured at a corresponding location in the DCI format 0_0 of the DCI. For example, the last valid bit in the DCI format 0_0 indicates the terminal device to send the message 3 on the first uplink carrier for sending the random access preamble.

In an optional implementation, the terminal device indicates, to the network device, that the terminal device supports the uplink carrier carrying the message 3 to be different from the first uplink carrier.

Based on this design, the terminal device can report the capability information of the terminal device to the network device, so that the network device schedules, for the terminal device in the random access process of the terminal device, an uplink carrier carrying the message 3, to reduce load of the first uplink carrier for sending the random access preamble, or reduce a network transmission latency caused when the first uplink carrier is subject to severe interference and channel quality is poor.

In an optional implementation, cell identifiers of serving cells in which the first uplink carrier and the second uplink carrier are located are the same; or the first uplink carrier and the second uplink carrier are configured by using SIB1.

In an optional implementation, cell identifiers of serving cells in which the first uplink carrier, the second uplink carrier, and the third uplink carrier are located are the same; or the first uplink carrier, the second uplink carrier, and the third uplink carrier are configured by using SIB1.

Based on this design, a plurality of uplink carriers may be configured for the terminal device in a same cell, to increase uplink coverage, so that the terminal device can obtain more uplink resources in the random access process.

In an optional implementation, the terminal device skips sending uplink transmission on the first uplink carrier and the second uplink carrier within a predetermined time interval before a time point at which the message 3 is sent.

Because different terminal devices have different capabilities, radio frequency chains of two or more uplink carriers supported by a terminal device with a strong capability (for example, a terminal supporting two or more antenna ports) are preconfigured, and switching duration is not needed when a radio frequency chain of uplink transmission of the terminal device is switched, so that 0 ms switching can be implemented. When a radio frequency chain of uplink transmission of a terminal with a weak capability (for example, a terminal supporting only one antenna port) is switched, there is interruption duration for implementing carrier switching, namely, a switching time interval. Therefore, uplink transmission of the terminal devices with different capabilities is not aligned in terms of time. Because the terminal device cannot report a capability of the terminal device to the network device in a random access process, the network device cannot correspondingly obtain uplink transmission of the terminal device based on the capability of the terminal device. Based on this design, regardless of whether the terminal device has a strong capability or a weak capability, it is designed that in the random access process, the terminal device does not send the uplink transmission on two uplink carriers before and after switching within a predetermined time interval when the uplink carrier is switched. In this way, the network device can uniformly indicate the uplink transmission of the terminal devices with different capabilities based on a lowest UE capability, and reserve switching duration for carrier switching. Therefore, it helps a communication system be compatible with the terminal device with a weak capability.

According to a second aspect according to the invention, an embodiment of this application provides an information receiving method. The method includes: A network device receives a random access preamble sent on a first uplink carrier; the network device sends first information, where the first information includes carrier indication information, the carrier indication information indicates a second uplink carrier used by a message 3 in a random access process, and the second uplink carrier is different from the first uplink carrier; and the network device receives the message 3 that is in the random access process and that is sent on the second uplink carrier.

In an optional implementation, the first information is downlink control information DCI, and a format of the DCI is 0_0.

In an optional implementation, the first information is a random access response uplink grant.

In an optional implementation, before the network device sends first information, the method further includes: The network device receives the message 3 sent on a third uplink carrier, where the third uplink carrier is different from the first uplink carrier and/or the second uplink carrier.

In an optional implementation, before the network device sends first information, the method further includes: The network device sends a random access response uplink grant to a terminal device, where the random access response uplink grant indicates the terminal device to send the message 3 on a third uplink carrier, and the third uplink carrier is different from the first uplink carrier and/or the second uplink carrier.

In an optional implementation, the first information is the downlink control information DCI, and the carrier indication information is the last m valid bits in the DCI format 0_0, where m is a positive integer, and m≥2; or the carrier indication information is the last n^{th} to (n-m)^{th} valid bits in the DCI format 0_0, where n≥2, m≥1, n>m, and n and m are positive integers. The valid bits do not include a zero filling bit in the DCI.

In an optional implementation, the method further includes: The network device obtains an indication from the terminal device that the terminal device supports the second uplink carrier carrying the message 3 to be different from the first uplink carrier.

In an optional implementation, cell identifiers of serving cells in which the first uplink carrier and the second uplink carrier are located are the same; or the first uplink carrier and the second uplink carrier are configured by using SIB1.

In an optional implementation, cell identifiers of serving cells in which the first uplink carrier, the second uplink carrier, and the third uplink carrier are located are the same; or the first uplink carrier, the second uplink carrier, and the third uplink carrier are configured by using SIB1.

In an optional implementation, the network device skips receiving uplink transmission of a terminal device on the first uplink carrier and the second uplink carrier within a predetermined time interval before a time point at which the message 3 is received.

According to a third aspect according to the invention, an embodiment of this application provides an information sending apparatus, including a communication unit. The communication unit is configured to send a random access preamble on a first uplink carrier; the communication unit is further configured to receive first information, where the first information includes carrier indication information, the carrier indication information indicates a second uplink carrier used by a message 3 in a random access process, and the second uplink carrier is different from the first uplink carrier; and the communication unit is further configured to send the message 3 in the random access process on the second uplink carrier.

In an optional implementation, the first information is downlink control information DCI, and a format of the DCI is 0_0.

In an optional implementation, the first information is a random access response uplink grant.

In an optional implementation, the communication unit is further configured to: before receiving the first information, send previous transmission of the message 3 on a third uplink carrier, where the third uplink carrier is different from the first uplink carrier and/or the second uplink carrier.

In an optional implementation, the communication unit is further configured to: before receiving the first information, receive a random access response uplink grant, where the random access response uplink grant indicates a terminal device to send the message 3 on a third uplink carrier, and the third uplink carrier is different from the first uplink carrier and/or the second uplink carrier.

In an optional implementation, the first information is the downlink control information DCI, and the carrier indication information is the last m valid bits in the DCI format 0_0, where m is a positive integer, and m≥2; or the carrier indication information is the last n^{th} to (n-m)^{th} valid bits in the DCI format 0_0, where n≥2, m≥1, n>m, and n and m are positive integers. The valid bits do not include a zero filling bit in the DCI.

In an optional implementation, the communication unit is further configured to indicate, to a network device, that the terminal device supports the uplink carrier carrying the message 3 to be different from the first uplink carrier.

In an optional implementation, cell identifiers of serving cells in which the first uplink carrier and the second uplink carrier are located are the same; or the first uplink carrier and the second uplink carrier are configured by using SIB1.

In an optional implementation, cell identifiers of serving cells in which the first uplink carrier, the second uplink carrier, and the third uplink carrier are located are the same; or the first uplink carrier, the second uplink carrier, and the third uplink carrier are configured by using SIB1.

In an optional implementation, the communication unit skips sending uplink transmission on the first uplink carrier and the second uplink carrier within a predetermined time interval before a time point at which the message 3 is sent.

According to a fourth aspect according to the invention, an embodiment of this application provides an information receiving apparatus, including a communication unit. The communication unit is configured to receive a random access preamble sent on a first uplink carrier; the communication unit is further configured to send first information, where the first information includes carrier indication information, the carrier indication information indicates a second uplink carrier carrying a message 3 in a random access process, and the second uplink carrier is different from the first uplink carrier; and the communication unit is further configured to receive the message 3 that is in the random access process and that is sent on the second uplink carrier.

In an optional implementation, the first information is downlink control information DCI, and a format of the DCI is 0_0.

In an optional implementation, the communication unit is further configured to: before sending the first information, receive the message 3 sent on a third uplink carrier, where the third uplink carrier is different from the first uplink carrier and/or the second uplink carrier.

In an optional implementation, the communication unit is further configured to: before sending the first information, send a random access response uplink grant to a terminal device. The random access response uplink grant indicates the terminal device to send the message 3 on a third uplink carrier, and the third uplink carrier is different from the first uplink carrier and/or the second uplink carrier.

In an optional implementation, the first information is the downlink control information DCI, and the carrier indication information is the last m valid bits in the DCI format 0_0, where m is a positive integer, and m≥2; or the carrier indication information is the last n^{th} to (n-m)^{th} valid bits in the DCI format 0_0, where n≥2, m≥1, n>m, and n and m are positive integers. The valid bits do not include a zero filling bit in the DCI.

In an optional implementation, the communication unit is further configured to obtain an indication from the terminal device that the terminal device supports the second uplink carrier carrying the message 3 to be different from the first uplink carrier.

In an optional implementation, cell identifiers of serving cells in which the first uplink carrier and the second uplink carrier are located are the same; or the first uplink carrier and the second uplink carrier are configured by using SIB1.

In an optional implementation, cell identifiers of serving cells in which the first uplink carrier, the second uplink carrier, and the third uplink carrier are located are the same; or the first uplink carrier, the second uplink carrier, and the third uplink carrier are configured by using SIB1.

In an optional implementation, the communication unit skips receiving uplink transmission on the first uplink carrier and the second uplink carrier within a predetermined time interval before a time point at which the message 3 is received.

According to a fifth aspect according to the invention, an embodiment of this application provides an information sending apparatus, including a processor and an interface circuit, where the processor is configured to communicate with a network device by using the interface circuit, and perform the method in the first aspect.

According to a sixth aspect according to the invention, an embodiment of this application provides an information receiving apparatus, including a processor and an interface circuit, where the processor is configured to communicate with a terminal device by using the interface circuit, and perform the method in the second aspect.

According to a seventh aspect not claimed, an embodiment of this application provides a computer-readable storage medium, including a computer program. When the computer program is run on a computer, the computer is enabled to perform the methods in the first aspect and the second aspect.

According to an eighth aspect not claimed, an embodiment of this application provides a computer program product. The computer program product includes a computer program. When the computer program is run on a computer, the computer is enabled to perform the methods in the first aspect and the second aspect.

According to a ninth aspect not claimed, this application further provides a chip system, including a processor, configured to perform the methods described in the foregoing aspects.

According to a tenth aspect not claimed, this application further provides a communication system, including a terminal device configured to perform any method in the first aspect and a network device configured to perform any method in the second aspect.

In this application, on the basis of the implementations provided in the foregoing aspects, the implementations may be further combined to provide more implementations.

### BRIEF DESCRIPTION OF DRAWINGS

FIG. 1 is a schematic diagram of radio signal coverage in 5G NR;
FIG. 2 is a schematic diagram of an architecture of a mobile communication system according to an embodiment of this application;
FIG. 3 is a schematic diagram of an architecture of a mobile communication system according to another embodiment of this application;
FIG. 4 is a schematic flowchart of an information sending and receiving method according to an embodiment of this application;
FIG. 5 is a schematic diagram of radio signal coverage according to an embodiment of this application;
FIG. 6 is a schematic flowchart of an information sending and receiving method according to another embodiment of this application;
FIG. 7 is a schematic diagram of an information sending apparatus according to this application;
FIG. 8 is a schematic diagram of an information receiving apparatus according to this application; and
FIG. 9 is a schematic diagram of an apparatus according to this application.
In the following description, features which in the above summary of the invention have been marked as "not claimed" are also hereinafter, when they are described and explained with reference to the drawings, to be understood as "not claimed" or "not part of the invention".

### DESCRIPTION OF EMBODIMENTS

In a wireless communication system, to establish a connection to a network device and request a corresponding dedicated resource allocated by the network device to a terminal device, and perform normal service transmission, the terminal device usually first performs random access to the network device. The terminal device establishes a connection to a cell and obtains uplink synchronization by using a random access process, and then performs subsequent communication.

A scenario in which the terminal device triggers random access includes any one of the following scenarios:
Scenario 1: The terminal device establishes an initial radio resource control (radio resource control, RRC) connection. When the terminal device switches from an idle mode to a connected mode, the terminal device initiates random access.

Scenario 2: The terminal device reestablishes an RRC connection. When the terminal device needs to reestablish the RRC connection after the RRC connection fails, the terminal device initiates random access.

Scenario 3: When the terminal device performs cell handover, the terminal device initiates random access in a target cell.

Scenario 4: When the terminal device is in a connected mode, the network device needs to transmit downlink data to the terminal device (that is, the downlink data arrives). If the terminal device is out of synchronization in uplink, the network device controls the terminal device to initiate random access. The network device maintains an uplink timer. If the uplink timer expires and the network device does not receive a response signal from the terminal device, the network device considers that the terminal device is out of synchronization in uplink.

Scenario 5: When the terminal device is in a connected mode, the terminal device needs to transmit uplink data to the network device (that is, the uplink data arrives). If the terminal device is out of synchronization in uplink, the terminal device initiates random access. The terminal device maintains an uplink timer. If the uplink timer expires and the terminal device does not receive a command of adjusting a maximum time advanced (time advanced, TA) value from the network device, the terminal device considers that the terminal device is out of synchronization in uplink.

In 5G NR, for a serving cell for which two uplink carriers (one normal uplink NUL carrier and one supplementary uplink SUL carrier) are configured, the terminal device may determine, based on a preconfigured RSRP threshold and a value of an RSRP measurement value, to perform random access on the NUL carrier or the SUL carrier. If the RSRP measurement value obtained by the terminal device through measurement is greater than the preconfigured RSRP threshold, the terminal device selects the NUL carrier to perform random access; otherwise, the terminal device selects the SUL carrier to perform random access. In an access process, uplink transmission of the terminal device is always performed on a same carrier. In other words, once the terminal device selects an uplink carrier to send a random access preamble, uplink transmission in an entire random access process needs to be completed on the uplink carrier. When uplink resources are limited and there are a large quantity of users, if a plurality of terminal devices choose to perform random access on a same uplink carrier, a conflict occurs, and a part of terminal devices fail in access.

In view of this, this application provides a solution. In this solution, the network device may schedule, based on a network status, the terminal device to send a message 3 in a random access process on another uplink carrier different from an uplink carrier for sending a random access preamble. This helps provide more uplink resources for uplink transmission, reduce an access latency, and implement fast random access.

The following explains and describes some terms in embodiments of this application, to facilitate understanding by a person skilled in the art.
(1). The terminal device (user equipment, UE) may be a wireless terminal device that can receive scheduling and indication information of the network device. The wireless terminal device may be a device that provides a user with a voice and/or data connectivity, a handheld device having a wireless connection function, or another processing device connected to a wireless modem.

The wireless terminal device may communicate with one or more core networks or the internet through a radio access network (such as a radio access network, RAN). The wireless terminal device may be a mobile terminal device, for example, a mobile phone (which is also referred to as a "cellular" phone or a mobile phone (mobile phone)), a computer, and a data card. For example, the wireless terminal device may be a portable, pocket-sized, handheld, computer built-in, or in-vehicle mobile apparatus that exchanges language and/or data with the radio access network. For example, the terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), a customer premises equipment (customer premises equipment, CPE), a terminal (terminal), a user equipment (user equipment, UE), a mobile terminal (mobile terminal, MT), or the like. Alternatively, the wireless terminal device may be a wearable device and a next-generation communication system, for example, a terminal device in a 5G network, a terminal device in a future evolved public land mobile network (public land mobile network, PLMN), or a terminal device in an NR communication system.

The terminal device may be deployed on land, and includes an indoor or outdoor device, a handheld device, or a vehicle-mounted device; may be deployed on water; or may be deployed on aircraft, a drone, a balloon, or a satellite in the air. Application scenarios of the radio access network device and the terminal device are not limited in embodiments of this application.
(2) The network device is an entity for transmitting or receiving a signal on a network side, for example, a next generation NodeB (generation NodeB, gNodeB).
   The network device may be a device configured to communicate with a mobile device. The network device may be an AP in a wireless local area network (wireless local area network, WLAN), a base station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (evolved NodeB, eNB or eNodeB) in long term evolution (long term evolution, LTE), a relay station, an access point, a vehicle-mounted device, a wearable device, a network device in a future 5G network, a network device in a future evolved public land mobile network (public land mobile network, PLMN), a gNodeB in an NR system, or the like. In addition, in embodiments of this application, the network device serves a cell, and the terminal device communicates with the network device by using a transmission resource (for example, a frequency domain resource, namely, a spectrum resource) used by the cell. The cell may be a cell corresponding to the network device (for example, a base station). The cell may belong to a macro base station, or may belong to a base station corresponding to a small cell (small cell). The small cell herein may include a metro cell (Metro cell), a micro cell (Micro cell), a pico cell (Pico cell), a femto cell (Femto cell), and the like. These small cells have features of small coverage and low transmit power, and are applicable to providing a high-rate data transmission service. In addition, in another possible case, the network device may be another apparatus that provides a wireless communication function for the terminal device. A specific technology and a specific device form that are used by the network device are not limited in embodiments of this application. For ease of description, in embodiments of this application, the apparatus that provides the wireless communication function for the terminal device is referred to as a network device.
(3) A message 3, namely, Msg3 means that, in contention-based random access, messages 3 and 4 are used to eliminate a conflict. The message 3 is carried on a PUSCH, and initial transmission of the message 3 is scheduled and transmitted by using a RAR UL grant. Retransmission of the message 3 is scheduled by a DCI format 0_0 scrambled by using a TC-RNTI. Before this, a UE obtains the TC-RNTI by receiving corresponding RAR information. The message 4 is a PDSCH scheduled by using a DCI format 1_0 scrambled by using the TC-RNTI, and the PDSCH includes a contention resolution ID.
(4) Scrambling means that a signal is encrypted by multiplying a pseudo random binary sequence by a spreading code. The pseudo random binary sequence may be understood as scrambling code in this application, and the scrambling code may be used for scrambling and descrambling. Further, scrambling downlink control information (downlink control information, DCI) or a physical downlink control channel (physical downlink control channel, PDCCH) may indicate scrambling a CRC field in the downlink control information DCI. Correspondingly, that the terminal device descrambles the PDCCH indicates that the CRC field is descrambled by using a corresponding type of radio network temporary identifier (RNTI), to determine a format, a type, or the like of the DCI.
(5). The term "and/or" in this application describes an association relationship between associated objects and represents that three relationships may exist. For example, A and/or B may represent the following three cases: Only A exists, both A and B exist, and only B exists. The character "/" generally represents an "or" relationship between associated objects.

"A plurality of" in this application means two or more.

In addition, it should be understood that, in the descriptions of this application, terms such as "first", "second", and "third" are merely used for distinguishing and description, but should not be understood as an indication or implication of relative importance, or should not be understood as an indication or implication of a sequence.

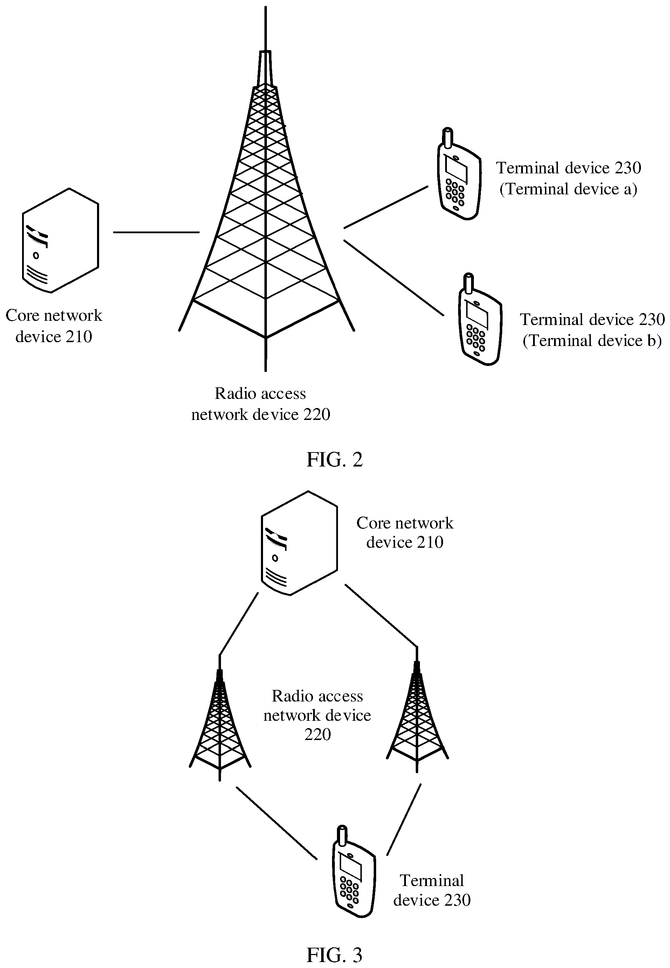

FIG. 2 is a schematic diagram of an architecture of a mobile communication system to which an embodiment of this application is applied.

The mobile communication system includes a core network device 210, a radio access network device 220, and a terminal device 230 (for example, a terminal device a and a terminal device b in FIG. 2).

Both the core network device 210 and the radio access network device 220 may be referred to as network devices. The terminal device 230 is connected to the radio access network device in a wireless manner, and the radio access network device is connected to the core network device in a wireless or wired manner. In some other scenarios, the terminal device 230 may be connected to a plurality of radio access network devices in a wireless manner, as shown in FIG. 3.

The core network device 210 and the radio access network device 220 may be different physical devices independent of each other, or a function of the core network device 210 and a logical function of the radio access network device 220 may be integrated into one physical device, or a part of functions of the core network device 210 and a part of functions of the radio access network device 220 may be integrated into one physical device.

The terminal device 230 may be located at a fixed position, or may be mobile. FIG. 2 and FIG. 3 are merely schematic diagrams, and the communication system may further include other network devices, for example, may further include a wireless relay device and a wireless backhaul device that are not drawn in FIG. 2. A quantity of core network devices, a quantity of radio access network devices, and a quantity of terminal devices included in the mobile communication system are not limited in embodiments of this application.

It should be understood that, technical solutions in embodiments of this application may be applied to various communication systems, for example, a long term evolution (long term evolution, LTE) system, a worldwide interoperability for microwave access (worldwide interoperability for microwave access, WiMAX) communication system, a future 5th generation (5th Generation, 5G) system such as a new radio access technology (new radio access technology, NR), and a future communication system such as a 6G system.

In addition, the word "example" in embodiments of this application is used to represent giving an example, an illustration, or a description. Any embodiment or implementation solution described as an "example" in this application should not be explained as being more preferred or having more advantages than another embodiment or implementation solution. Exactly, the word "example" is used to present a concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that: With evolution of the network architecture and emergence of a new service scenario, the technical solutions provided in embodiments of this application are also applicable to similar technical problems.

In embodiments of this application, the network device may support a plurality of random access manners, for example, a 4-step random access manner (4-step RACH) currently supported by both the terminal device and the network device. With development of communication technologies, more other random access manners may emerge in the future, and the plurality of random access manners described herein may be included. In addition, it should be noted that the 4-step random access manner and a 4-step random access process in this application have a same meaning.

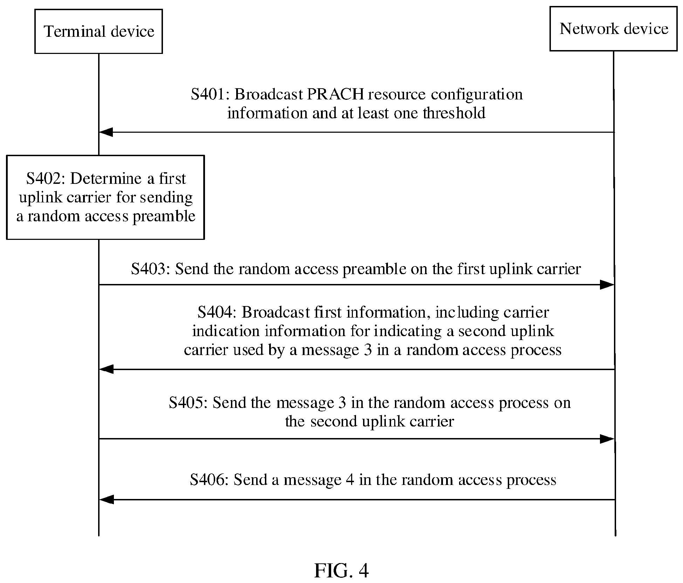

To avoid a problem in a conventional solution that random access fails due to a conflict of resources used by a plurality of terminal devices in a random access process, embodiments of this application provide an information sending and receiving method. The method is applicable to the communication systems shown in FIG. 2 or FIG. 3. The following describes specific steps of the method in detail with reference to a flowchart of an information sending and receiving method shown in FIG. 4.

S401: A network device configures, for a terminal device, a preamble set available to the network device, and broadcasts PRACH resource configuration information of N uplink carriers to the terminal device in an entire cell by using a system message. The PRACH resource configuration information includes a root sequence and a cyclic shift parameter of a random access preamble (preamble), and a PRACH transmission parameter. The PRACH transmission parameter includes, for example, a PRACH preamble format, and a time domain resource and a frequency domain resource for PRACH transmission. N is a positive integer greater than or equal to 2.

The network device may further broadcast at least one threshold to the terminal device in the cell by using the system message. The terminal device may select, based on the received system message, the random access preamble used for random access, determine a first uplink carrier for sending the random access preamble, and then perform random access. It should be noted that the system message may be, for example, a higher layer parameter UplinkConfigCommon, UplinkConfigCommonSIB, or RACH-configCommon, and the sent random access preamble is any preamble selected by the terminal device from the preamble set configured by the network device. This is not limited in this application.

The N uplink carriers are configured by the network device for terminal devices in a same cell, and may include a normal uplink NUL carrier and/or a supplementary uplink SUL carrier. Uplink coverage of the SUL carrier may supplement uplink coverage of the NUL carrier. The N uplink carriers may be configured based on an application scenario, a service requirement, or the like. This is not limited in this application.

In an example, the N uplink carriers may include at least two uplink carriers, including the normal uplink NUL carrier and/or the supplementary uplink SUL carrier. In other words, whether the N uplink carriers are specifically NUL carriers or SUL carriers is not distinguished.

In another example, the N uplink carriers may include at least one normal uplink NUL carrier and at least one supplementary uplink SUL carrier, for example, include but are not limited to any combination of the following:
1. one NUL carrier and one SUL carrier;
2. one NUL carrier and at least one SUL carrier;
3. one SUL carrier and at least one NUL carrier; or
4. at least two NUL carriers, at least two SUL carriers, and the like.

In these combinations, the NUL carrier may represent a high-frequency TDD carrier, including but not limited to a 3.5 GHz C band. The SUL carrier may represent a low-frequency FDD uplink band, including but not limited to a 1.8 GHz band or a sub-1G band. Alternatively, the SUL carrier may represent a low-frequency TDD band, for example, 2.0 GHz or 2.6 GHz. Alternatively, the SUL carrier may represent a high-frequency TDD band, for example, 4.9 GHz.

Therefore, a plurality of uplink carriers are configured for the terminal device, to enhance uplink coverage, increase an uplink capacity, and provide more uplink resources for uplink transmission, so that the terminal device with a corresponding capability switches an uplink carrier in a random access process, to avoid an access failure or a long access latency that may be caused because load of the first uplink carrier is heavy or channel quality is poor.

It should be noted that, because different terminal devices have different capabilities, radio frequency chains of two or more uplink carriers supported by a terminal device with a strong capability (for example, a terminal supporting two or more antenna ports) are preconfigured, and switching duration is not needed when a radio frequency chain of uplink transmission of the terminal device is switched, so that 0 ms switching can be implemented. When a radio frequency chain of uplink transmission of a terminal with a weak capability (for example, a terminal supporting only one antenna port) is switched, there is interruption duration for implementing carrier switching, namely, a switching time interval. Therefore, uplink transmission of the terminal devices with different capabilities is not aligned in terms of time. Because the terminal device cannot report a capability of the terminal device to the network device in the random access process, the network device cannot correspondingly obtain uplink transmission of the terminal device based on the capability of the terminal device. Therefore, in this embodiment of this application, it may alternatively be designed that the terminal device skips sending uplink transmission on the first uplink carrier or a second uplink carrier within a predetermined time interval before a time point at which the message 3 is sent. Based on this design, regardless of whether the terminal device has a strong capability or a weak capability, it is designed that in the random access process, the terminal device does not send uplink transmission on two uplink carriers before and after switching within a predetermined time interval when the uplink carrier is switched. In this way, the network device can uniformly indicate the uplink transmission of the terminal devices with different capabilities based on a lowest UE capability, and reserve switching duration for carrier switching. Therefore, it helps a communication system be compatible with the terminal device with a weak capability. In the following descriptions, when the terminal device switches the uplink carrier in the random access process, it is designed that the terminal device does not send, within the predetermined time interval, uplink transmission on the two uplink carriers to be switched. Details are not described below.

S402: The terminal device selects, based on the at least one threshold, an appropriate carrier from the N uplink carriers as the first uplink carrier for sending the random access preamble (Random access preamble).

S403: The terminal device sends the random access preamble, namely, a message 1, on the first uplink carrier.

The at least one threshold may be a reference signal received power (Reference Signal Received Power, RSRP) threshold. The terminal device may select, by detecting a downlink synchronization signal (for example, a synchronization signal block (synchronization signal block, SSB) or a channel state information-reference signal (channel state information-reference signal, CSI-RS)), a cell to be accessed, and obtain an RSRP measurement value obtained through measurement based on the downlink synchronization signal. Then, based on a value relationship between the RSRP measurement value and the at least one RSRP threshold, the appropriate carrier is selected from the N uplink carriers as the first uplink carrier for sending the random access preamble (Random access preamble).

Alternatively, the at least one threshold may be a distance threshold between a location of the terminal device and a location of the network device, and one distance threshold may correspond to a maximum coverage area of one uplink carrier. For example, the terminal device may obtain location information of the terminal device by using a positioning technology, and then obtain a measurement value of a distance between the location of the terminal device and the location of the network device. Then, based on a value relationship between the measurement value of the distance and the at least one distance threshold, the appropriate carrier is selected from the N uplink carriers as the first uplink carrier for sending the random access preamble (Random access preamble).

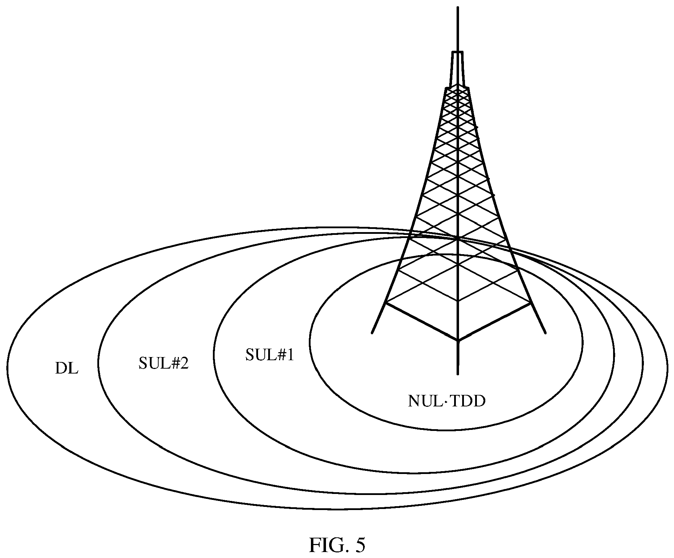

With reference to an uplink carrier combination shown in FIG. 5, the following briefly describes how the terminal device determines, based on the at least one threshold, the first uplink carrier for sending the random access preamble.

As shown in FIG. 5, the N uplink carriers may include an NUL carrier, a SUL#1 carrier, and a SUL#2 carrier. Frequencies of the NUL carrier, the SUL#1 carrier, and the SUL#2 carrier decrease sequentially, and uplink coverage of the NUL carrier, the SUL#1 carrier, and the SUL#2 carrier gradually extends from a cell center to a cell edge. It should be understood that FIG. 5 is merely an example for description instead of any limitation. In another embodiment, the uplink coverage of the N uplink carriers may alternatively be presented as that, for example, uplink coverage of a SUL carrier and an NUL carrier gradually extends from a cell center to a cell edge. This is not limited in this application.

In an example, the at least one threshold may include one RSRP threshold. The terminal device determines through comparison a value relationship between an RSRP measurement value and the RSRP threshold, and determines whether the terminal device is located in the cell center or at the cell edge, to determine whether a carrier type of the to-be-selected first uplink carrier is the NUL carrier or the SUL carrier. Then, an uplink carrier is selected from carriers of a corresponding type as the first uplink carrier for sending the random access preamble. Specifically, if the RSRP measurement value is greater than the RSRP threshold, the terminal device determines to send the random access preamble on the NUL carrier, and therefore may select the NUL carrier as the first uplink carrier. If the RSRP measurement value is less than the RSRP threshold, the terminal device determines to send the random access preamble on the SUL carrier, and therefore may select the SUL#1 carrier or the SUL#2 carrier as the first uplink carrier.

In another example, the at least one threshold may include N-1 RSRP thresholds, where N is a quantity of uplink carriers configured by the network device, and is a total quantity of NUL carriers and SUL carriers. One RSRP threshold is set for uplink carriers on every two adjacent frequency bands, and there are N-1 RSRP thresholds in total. The terminal device may compare the RSRP measurement value with the N-1 RSRP thresholds level by level, until the first uplink carrier for sending the random access preamble is determined.

Refer to FIG. 5. The at least one threshold includes an RSRP threshold #1 and an RSRP threshold #2 that are correspondingly configured for the NUL carrier, the SUL#1 carrier, and the SUL#2 carrier. A value relationship between RSRP value intervals corresponding to the NUL carrier, the SUL#1 carrier, and the SUL#2 carrier and the configured RSRP thresholds is:
SUL#2<RSRP threshold #2<SUL#1 <RSRP threshold #1 <NUL.

The terminal device may compare the RSRP measurement value with the RSRP threshold #1 and the RSRP threshold #2, to determine an RSRP value interval corresponding to the RSRP measurement value, and determine a corresponding uplink carrier.

Specifically, if the RSRP measurement value is greater than the RSRP threshold #1, the terminal device selects the NUL carrier as the first uplink carrier. If the RSRP measurement value is less than the RSRP threshold #1, the terminal device may select an uplink carrier from SUL#1 and SUL#2 as the first uplink carrier. The terminal device compares the RSRP measurement value with the RSRP threshold #2. If the RSRP measurement value is greater than the RSRP threshold #2 and less than the RSRP threshold #1, the terminal device selects the SUL#1 carrier as the first uplink carrier. If the RSRP measurement value is less than the RSRP threshold #2, the terminal device selects the SUL#2 carrier as the first uplink carrier.

Alternatively, the terminal device may determine a relationship between the RSRP measurement value and the N-1 RSRP thresholds, determine, from the N-1 RSRP thresholds, a minimum RSRP threshold greater than the RSRP measurement value and a maximum RSRP threshold less than the RSRP measurement value, and then select an uplink carrier whose RSRP value interval is between the two RSRP thresholds as the first uplink carrier.

It should be understood that FIG. 5 is merely used as an example to describe how the terminal device selects the first uplink carrier in this embodiment of this application instead of any limitation. In another embodiment, the at least one threshold may not be limited to one threshold or N-1 thresholds. Correspondingly, a manner in which the terminal device selects the first uplink carrier may not be limited to the foregoing level-by-level comparison manner or the foregoing manner of determining the maximum or minimum threshold. Details are not described herein.

S404: The network device receives the random access preamble sent by the terminal device on the first uplink carrier, and sends first information based on the first uplink carrier. The first information includes carrier indication information for indicating the second uplink carrier used by the message 3 in the random access process.

S405: The terminal device sends the message 3 on the second uplink carrier.

S406: The terminal device receives a message 4 sent by the network device. The network device resolves the conflict and sends information of the terminal device that succeeds in conflict resolution to the terminal device.

In this embodiment of this application, the second uplink carrier may be the same as the first uplink carrier, or the second uplink carrier may be different from the first uplink carrier. The terminal device may be a first device that has a carrier switching capability in the random access process or a second device that does not have a carrier switching capability in the random access process. The terminal device indicates capability information of the terminal device to the network device, and the network device configures the carrier indication information and the first information for the terminal device based on a capability of the terminal device, to schedule uplink transmission of the message 3 in the random access process. If the terminal device does not have the carrier switching capability in the random access process, the second uplink carrier indicated by the carrier indication information carried in the first information is the same as the first uplink carrier used by the terminal device to send the random access preamble. If the terminal device has the carrier switching capability in the random access process, the second uplink carrier indicated by the carrier indication information carried in the first information may be different from the first uplink carrier used by the terminal device to send the access preamble.

In this embodiment of this application, a plurality of manners may indicate whether the terminal device has the carrier switching capability in the random access process, or whether the uplink carrier carrying the message 3 may be different from the first uplink carrier for sending the random access preamble. The indication may be an explicit indication or an implicit indication. This is not limited in this application.

In an example, the terminal device may explicitly or implicitly indicate, to the network device by using the first uplink carrier for sending the random access preamble, whether the terminal device supports or allows the second uplink carrier carrying the message 3 to be different from the first uplink carrier. For example, if the first uplink carrier is a first-type uplink carrier, it is considered that the terminal device does not have the carrier switching capability in the random access process. In other words, the terminal device does not support or allow the uplink carrier to be switched in the random access process, and the network device determines that the second uplink carrier used by the message 3 needs to be the same as the first uplink carrier. If the first uplink carrier is a second-type uplink carrier, it is considered that the terminal device has the carrier switching capability in the random access process. In other words, the terminal device supports or allows the uplink carrier to be switched in the random access process, and the network device determines that the second uplink carrier carrying the message 3 may be different from the first uplink carrier. Both the first-type uplink carrier and the second-type uplink carrier are carriers used for uplink transmission, and at least one of the following information: an absolute frequency of a reference resource block, a frequency band, a parameter set, or a carrier offset relative to the reference resource block of the first-type uplink carrier is different from that of the second-type uplink carrier. In an example, the first-type uplink carrier may include a C-band TDD UL carrier or a SUL carrier with a lowest frequency (for example, a 1.8 G FDD UL carrier), and the second-type uplink carrier may include an uplink carrier other than the C-band TDD UL carrier or the SUL carrier with the lowest frequency (for example, the 1.8 G FDD UL carrier). This is not limited in this application. It should be understood that the foregoing is merely an example to describe how the terminal device notifies the network device of the capability information of the terminal device instead of any limitation. In another embodiment, the terminal device may alternatively indicate the capability information of the terminal device to the network device in another manner, for example, indicate the capability information of the terminal device by using a predetermined field in the message 1, or indicate the capability information of the terminal device by using a predetermined indication message sent to the network device. Details are not described herein.

In an example, the terminal device may obtain a group of PRACH resources, and the terminal device implicitly notifies, by selecting a PRACH resource, the network device whether the terminal device supports radio frequency chain switching in the random access process, or the terminal device implicitly notifies, by selecting a PRACH resource, the network device whether the terminal device has a capability of radio frequency chain switching in the random access process. The group of PRACH resources includes a first-type PRACH resource and a second-type PRACH resource. If the terminal device does not support radio frequency chain switching in the random access process or does not have the capability of radio frequency chain switching in the random access process, the terminal device selects one first-type PRACH resource to send the random access preamble. If the terminal device supports radio frequency chain switching in the random access process or has the capability of radio frequency chain switching in the random access process, the terminal device selects one second-type PRACH resource to send the random access preamble. The network device receives the random access preamble sent by the terminal device. If a PRACH resource for sending the random access preamble is the first-type PRACH resource, it may be considered that the uplink carrier used by the message 3 indicated by indication information of the PRACH resource needs to be the same as the first uplink carrier for sending the random access preamble. If a PRACH resource for sending the random access preamble is the second-type PRACH resource, it may be considered that the uplink carrier used by the message 3 indicated by indication information of the PRACH resource may be different from the first uplink carrier for sending the random access preamble. Both the first-type PRACH resource and the second-type PRACH resource are channel resources used for random access, and at least one of the following: a PRACH preamble format, a time domain resource for PRACH transmission, a frequency domain resource, or a code domain resource of the first-type PRACH resource is different from that of the second-type PRACH resource. In a feasible implementation, the PRACH resource may alternatively be replaced with other information, for example, a preamble sequence and indication information of the preamble sequence, or a preamble format and indication information of the preamble format, indicating whether the uplink carrier used by the message 3 may be different from the first uplink carrier for sending the random access preamble. Details are not described herein.

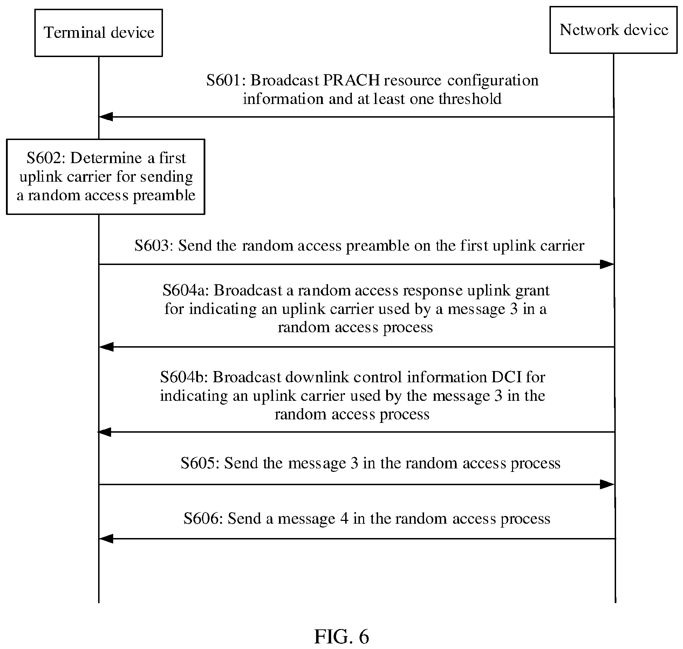

In an example, the first information in FIG. 4 may be specifically a random access response uplink grant (RAR UL grant) transmitted in step S604a in FIG. 6, and may be used to schedule initial transmission of the message 3 in the random access process. A RAR includes time-frequency resource allocation of the message 3, a temporary cell-radio network temporary identifier (Temporary Cell-Radio Network Temporary Identifier, TC-RNTI), and the like. DCI scrambled by using a RA-RANT is common DCI, and may be received by all terminal devices in a cell.

If the network device determines that the terminal device does not have the carrier switching capability in the random access process, the RAR UL grant cannot indicate the uplink carrier used by the message 3 in the random access process, or the uplink carrier used by the message 3 indicated by the RAR UL grant is the first uplink carrier. The terminal device sends the message 3 on the first uplink carrier. If the network device determines that the terminal device has the carrier switching capability in the random access process, the uplink carrier used by the message 3 indicated by the RAR UL grant is the second uplink carrier, and the second uplink carrier may be different from the first uplink carrier. After receiving the RAR UL grant, the terminal device may send the message 3 to the network device on the second uplink carrier based on an indication of the RAR UL grant.

In an actual network environment, there may be a case in which the network device cannot correctly receive the message 3. For example, the case includes but is not limited to: The terminal device does not receive or does not correctly receive the DCI/RAR for scheduling the message 3; the uplink carrier for sending the message 3 is subject to strong interference; or the terminal device moves (for example, moves from a cell center to a cell edge or moves from a cell edge to a cell center). If the network device cannot correctly receive the message 3, the network device further schedules retransmission of the message 3.

In an example, the first information in FIG. 4 may be specifically downlink control information DCI transmitted in step S604b in FIG. 6, and a format of the DCI is 0_0. The DCI format 0_0 may be used to schedule retransmission of the message 3, and the terminal device may resend the message 3 to the network device based on a resource indicated by the DCI format 0_0. The DCI for scheduling retransmission of the message 3 may be scrambled by using the TC-RNTI, and the terminal device detects, in a common search space, the DCI scrambled by using the TC-RNTI. The DCI is common DCI, and all the terminal devices in the cell can detect the DCI.

If the network device determines that the terminal device does not have the carrier switching capability in the random access process, the uplink carrier used by the message 3 indicated by the DCI format 0_0 scrambled by using the TC-RNTI is the first uplink carrier; or bit reservation in a UL/SUL indication information field in the DCI does not take effect, and a PUSCH scheduled by the DCI is always on a same uplink carrier as a previous transmission block of a same transmission block (transmission block, TB). If the network device determines that the terminal device has the carrier switching capability in the random access process, the uplink carrier used by the message 3 indicated by the DCI format 0_0 scrambled by using the TC-RNTI is the second uplink carrier, and the second uplink carrier is different from the first uplink carrier. After receiving the DCI format 0_0 scrambled by using the TC-RNTI, the terminal device resends the message 3 to the network device on the second uplink carrier based on an indication of the DCI format 0_0 scrambled by using the TC-RNTI.

In an example, the network device may configure, based on the capability information of the terminal device, the carrier indication information at different locations of the DCI format 0_0 scrambled by using the TC-RNTI, to indicate the uplink carrier used by the message 3. After receiving the DCI format 0_0 scrambled by using the TC-RNTI, the terminal device determines, by reading a corresponding bit in the DCI format 0_0 scrambled by using the TC-RNTI, the uplink carrier used by the message 3 when the retransmission of the message 3 is scheduled.

If the network device determines that the terminal device does not have the carrier switching capability in the random access process, the network device may set a first bit in the DCI format 0_0 scrambled by using the TC-RNTI as a UL/SUL indication field, and use the UL/SUL indication field as the carrier indication information, to indicate the uplink carrier used by the message 3. If SUL-related information is configured for the terminal device, and a quantity of bits in a DCI format 1_0 before zero padding is greater than a quantity of bits in the DCI format 0_0, the first bit may be the last valid bit in the DCI format 0_0 scrambled by using the TC-RNTI, where the valid bit does not include a zero filling bit in the DCI.

If the network device determines that the terminal device has the carrier switching capability in the random access process, the network device may set a second bit in the DCI format 0_0 scrambled by using the TC-RNTI as a UL/SUL indication field, and use the UL/SUL indication field as the carrier indication information, to indicate the uplink carrier used by the message 3. If SUL-related information is configured for the terminal device, and a quantity of bits in a DCI format 1_0 before zero padding is greater than a quantity of bits in the DCI format 0_0 by at least 2, the second bit may be the last m valid bits in the DCI format 0_0 scrambled by using the TC-RNTI, m is a positive integer, and m≥2; or the second bit may be the last n^{th} to (n-m)^{th} valid bits in the DCI format 0_0 scrambled by using the TC-RNTI, where n≥2, m≥1, n>m, and n and m are positive integers, and the valid bits do not include a zero filling bit in the DCI. In an example, if N=3, the second bit may include the last two valid bits in the DCI format 0_0 scrambled by using the TC-RNTI, or is the second-to-last valid bit in the DCI format 0_0 scrambled by using the TC-RNTI, or the second-to-last and third-to-last valid bits in the DCI format 0_0 scrambled by using the TC-RNTI. If N=4, the second bit may include the last third valid bits in the DCI format 0_0 scrambled by using the TC-RNTI, or is the second-to-last and third-to-last valid bits in the DCI format 0_0 scrambled by using the TC-RNTI, or the second-to-last, third-to-last, and fourth-to-last valid bits in the DCI format 0_0 scrambled by using the TC-RNTI.

Therefore, in embodiment shown in FIG. 4 or FIG. 6, the network device may include, depending on whether the terminal device has the carrier switching capability in the random access process, the carrier indication information in the DCI format 0_0 scrambled by using the random access response uplink grant and/or the TC-RNTI, to indicate whether the terminal device can send the message 3 in the random access process on another uplink carrier different from the first uplink carrier. This helps reduce load of the first uplink carrier and resolve a problem that the load of the first uplink carrier is heavy. In addition, the terminal device is supported or allowed to switch the uplink carrier in the random access process, to help avoid a problem that a transmission latency is increased because the message 3 is retransmitted repeatedly when the first uplink carrier is subject to severe interference or the channel quality is poor. In addition, carrier switching is allowed for the message 3 in the random access process, so that more uplink resources can be provided for the random access of the terminal device, to help the terminal device implement fast access.

It should be noted that, in the flowcharts shown in FIG. 4 and FIG. 6, when the random access process involves the initial transmission of the message 3 in response to the RAR UL grant and the retransmission of the message 3 in response to the DCI format 0_0 scrambled by using the TC-RNTI, for ease of differentiation, uplink carriers used for the initial transmission and the retransmission of the message 3 may have different names. For example, if the first information is the DCI format 0_0 scrambled by using the TC-RNTI, the uplink carrier used for the retransmission of the message 3 in response to the DCI format 0_0 scrambled by using the TC-RNTI may be referred to as the second uplink carrier, and an uplink carrier used for previous transmission (including the initial transmission of the message 3 in response to the RAR UL grant) of the message 3 may be referred to as a third uplink carrier. Based on the capability information of the terminal device, the third uplink carrier may be the same as the first uplink carrier and/or the second uplink carrier, or may be different from the first uplink carrier and/or the second uplink carrier. For details, refer to the foregoing related descriptions. Details are not described herein.

Based on the foregoing embodiment, in the process in which the terminal device performs random access, the network device may schedule, based on a network status and the capability information of the terminal device, the terminal device to send the message 3 in the random access process on another uplink carrier different from the first uplink carrier for sending the random access preamble. This helps provide more uplink resources for uplink transmission, reduce an access latency, and implement fast access. If the terminal device does not have the carrier switching capability in the random access process, once the terminal device selects an uplink carrier to send the random access preamble, uplink transmission in the entire random access process is completed on the uplink carrier. If the terminal device has the carrier switching capability in the random access process, the terminal device may switch an uplink carrier in the entire random access process. In other words, different uplink transmission in the random access process may be completed on different uplink carriers. In this case, the random access process of the terminal device may specifically include the following cases:

### Case 1:

The first information is the random access response uplink grant RAR UL grant. The terminal device sends the random access preamble on the first uplink carrier, and sends the message 3 on the second uplink carrier indicated by the RAR UL grant. The first uplink carrier is different from the second uplink carrier. The terminal device switches from the first uplink carrier to the second uplink carrier, and the terminal device does not send uplink transmission on the first uplink carrier or the second uplink carrier within the predetermined time interval before a time point at which the message 3 is sent.

### Case 2:

The first information is the DCI format 0_0 scrambled by using the TC-RNTI. The terminal device sends the random access preamble on the first uplink carrier, and sends the message 3 on the second uplink carrier indicated by the DCI format 0_0 scrambled by using the TC-RNTI. The first uplink carrier is different from the second uplink carrier. The terminal device switches from the first uplink carrier to the second uplink carrier, and the terminal device does not send uplink transmission on the first uplink carrier or the second uplink carrier within the predetermined time interval before a time point at which the message 3 is sent.

### Case 3:

The first information is the DCI format 0_0 scrambled by using the TC-RNTI. The terminal device sends the random access preamble on the first uplink carrier, sends the message 3 on the third uplink carrier indicated by the random access response uplink grant RAR UL grant, and resends the message 3 on the second uplink carrier indicated by the DCI format 0_0 scrambled by using the TC-RNTI. The third uplink carrier is different from the second uplink carrier, and the first uplink carrier may be the same as the third uplink carrier. The terminal device switches from the third uplink carrier to the second uplink carrier, and the terminal device does not send uplink transmission on the third uplink carrier or the second uplink carrier within the predetermined time interval.

### Case 4:

The first information is the DCI format 0_0 scrambled by using the TC-RNTI. The terminal device sends the random access preamble on the first uplink carrier, sends previous transmission of the message 3 on the third uplink carrier, and resends the message 3 on the second uplink carrier indicated by the DCI format 0_0 scrambled by using the TC-RNTI. The third uplink carrier is different from the second uplink carrier, and the first uplink carrier may be the same as the third uplink carrier. The terminal device switches from the third uplink carrier to the second uplink carrier, and the terminal device does not send uplink transmission on the third uplink carrier or the second uplink carrier within the predetermined time interval.

### Case 5:

The first information is the DCI format 0_0 scrambled by using the TC-RNTI. The terminal device sends the random access preamble on the first uplink carrier, sends the message 3 on the third uplink carrier indicated by the random access response uplink grant RAR UL grant, and resends the message 3 on the second uplink carrier indicated by the DCI format 0_0 scrambled by using the TC-RNTI. The first uplink carrier is different from the second uplink carrier, and the second uplink carrier is different from the third uplink carrier. When the terminal device switches from the first uplink carrier to the third uplink carrier, the terminal device does not send uplink transmission on the first uplink carrier or the third uplink carrier within the predetermined time interval. When the terminal device switches from the third uplink carrier to the second uplink carrier, the terminal device does not send uplink transmission on the third uplink carrier or the second uplink carrier within the predetermined time interval.

### Case 6:

The first information is the DCI format 0_0 scrambled by using the TC-RNTI. The terminal device sends the random access preamble on the first uplink carrier, sends previous transmission of the message 3 on the third uplink carrier, and resends the message 3 on the second uplink carrier indicated by the DCI format 0_0 scrambled by using the TC-RNTI. The first uplink carrier is different from the second uplink carrier, and the second uplink carrier is different from the third uplink carrier. When the terminal device switches from the first uplink carrier to the third uplink carrier, the terminal device does not send uplink transmission on the first uplink carrier or the third uplink carrier within the predetermined time interval. When the terminal device switches from the third uplink carrier to the second uplink carrier, the terminal device does not send uplink transmission on the third uplink carrier or the second uplink carrier within the predetermined time interval.

Therefore, in the foregoing plurality of cases, in the process in which the terminal device performs random access, the network device indicates, depending on whether the terminal device has the carrier switching capability in the random access process, whether the terminal device can send the message 3 in the random access process on another uplink carrier different from the first uplink carrier for sending the random access preamble. This helps reduce the load of the first uplink carrier, and helps resolve the problem that load of the first uplink carrier is heavy. In addition, the terminal device is supported or allowed to switch the uplink carrier in the random access process, to help avoid the problem that the transmission latency is increased because the message 3 is retransmitted repeatedly when the first uplink carrier is subject to severe interference or the channel quality is poor. In addition, carrier switching is allowed for the message 3 in the random access process, so that more uplink resources can be provided for the random access of the terminal device, to help the terminal device implement fast access.

In the foregoing embodiment, a single-transmission case, to be specific, a single uplink carrier carries the random access preamble or the message 3 in the random access process is mainly used as an example for description. In some embodiments, a concurrent-transmission case may further exist. To be specific, the random access preamble or the message 3 in the random access process is carried on two or more uplink carriers. A case in which two concurrent uplink carriers exist is used as an example. The random access process of the terminal device may specifically include the following cases:

Case A: The random access response uplink grant (RAR UL grant) indicates the second uplink carrier used by the message 3.

A1: The RAR UL grant indicates one second uplink carrier.

Uplink carriers on which the random access preamble sent by the terminal device is located are two first uplink carriers, and the second uplink carrier indicated by the RAR UL grant is different from the two first uplink carriers; or the second uplink carrier indicated by the RAR UL grant is different from one of the two first uplink carriers.

A2: The RAR UL grant indicates two second uplink carriers.

An uplink carrier on which the random access preamble sent by the terminal device is located is one first uplink carrier, and one of the two second uplink carriers indicated by the RAR UL grant is the same as the first uplink carrier; or the two second uplink carriers indicated by the RAR UL grant are different from the first uplink carrier.

Uplink carriers on which the random access preamble sent by the terminal device is located are two first uplink carriers, and one of the two second uplink carriers indicated by the RAR UL grant is the same as the two first uplink carriers; or the two second uplink carriers indicated by the RAR UL grant are different from the two first uplink carriers.

Case B: The DCI format 0_0 scrambled by using the TC-RNTI indicates the second uplink carrier used by the message 3.

B1: The DCI format 0_0 scrambled by using the TC-RNTI indicates one second uplink carrier.

The RAR UL grant indicates two third uplink carriers, and the second uplink carrier indicated by the DCI format 0_0 is different from the two third uplink carriers indicated by the RAR UL grant; or the second uplink carrier indicated by the DCI format 0_0 is different from one of the two third uplink carriers indicated by the RAR UL grant.

B2: The DCI format 0_0 scrambled by using the TC-RNTI indicates two second uplink carriers.

The RAR UL grant indicates one third uplink carrier, and one of the two second uplink carriers indicated by the DCI format 0_0 is the same as the third uplink carrier indicated by the RAR UL grant; or the two second uplink carriers indicated by the DCI format 0_0 are different from the third uplink carrier indicated by the RAR UL grant.

The RAR UL grant indicates two third uplink carriers, and one of the two second uplink carriers indicated by the DCI format 0_0 is the same as the two third uplink carriers indicated by the RAR UL grant; or the two second uplink carriers indicated by the DCI format 0_0 are different from the two third uplink carriers indicated by the RAR UL grant.

Case C: The DCI indicates the second uplink carrier used by the message 3, where the second uplink carrier is different from the first uplink carrier for sending the random access preamble.

C1: The DCI indicates one second uplink carrier.

Uplink carriers on which previous transmission of the message 3 sent by the terminal device is located are two third uplink carriers, and the second uplink carrier indicated by the DCI is different from the two third uplink carriers; or the second uplink carrier indicated by the DCI is the same as one of the two third uplink carriers.

C2: The DCI indicates two second uplink carriers.

Uplink carriers on which previous transmission of the message 3 sent by the terminal device is located are two third uplink carriers, and the second uplink carrier indicated by the DCI is different from the two third uplink carriers; or the second uplink carrier indicated by the DCI is the same as one of the two third uplink carriers.

An uplink carrier on which previous transmission of the message 3 sent by the terminal device is located is one third uplink carrier, and the two second uplink carriers indicated by the DCI are different from the third uplink carrier; or the second uplink carrier indicated by the DCI is the same as one of the two third uplink carriers.

It should be understood that the foregoing uses only two concurrent uplink carriers as an example for description instead of limitation. The random access solution in this embodiment of this application may also be applied to a more complex concurrent-transmission case or a case in which single-transmission and concurrent-transmission coexist. Details are not described herein.

Therefore, in the foregoing plurality of cases, in the process in which the terminal device performs random access, the network device indicates, depending on whether the terminal device has the carrier switching capability in the random access process, whether the terminal device can send the message 3 in the random access process on at least one of other uplink carriers different from the first uplink carrier for sending the random access preamble. This helps reduce the load of the first uplink carrier, and resolve the problem that the load of the first uplink carrier is heavy. In addition, the terminal device is supported or allowed to switch the uplink carrier in the random access process, to help avoid a problem that a transmission latency is increased because the message 3 is retransmitted repeatedly when the first uplink carrier is subject to severe interference or the channel quality is poor. In addition, carrier switching is allowed for the message 3 in the random access process, so that more uplink resources can be provided for the random access of the terminal device, to help the terminal device implement fast access.

The foregoing describes, mainly from the perspective of interaction between the network device and the terminal device, the solutions provided in this application. It may be understood that, to implement the foregoing functions, the network device and the terminal device include corresponding hardware structures and/or software modules for performing the functions. A person of ordinary skill in the art should easily be aware that, with reference to units and algorithm steps of each example described in the embodiments disclosed in this application, the present invention can be implemented in a form of hardware or a combination of hardware and computer software. Whether a function is executed by hardware or hardware driven by computer software depends on particular applications and design constraints of technical solutions. A person skilled in the art may use different methods to implement the described functions for each particular application, but it should not be considered that the implementation goes beyond the scope of the present invention.

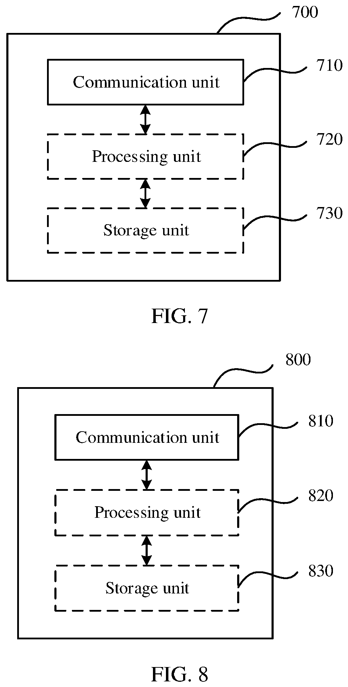

FIG. 7 is a possible example block diagram of an information sending apparatus according to this application. The apparatus 700 may exist in a form of software or hardware. The apparatus 700 may include a communication unit 710. In an implementation, the communication unit 710 may include a receiving unit and a sending unit. The communication unit 710 is configured to support the apparatus 700 in communicating with another network entity. In some embodiments, the apparatus 700 may further include a processing unit 720 and/or a storage unit 730. The processing unit 720 is configured to control an action of the apparatus 700, and the storage unit 730 is configured to store program code and data of the apparatus 700.

The processing unit may be a processor or a controller, such as a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The storage unit may be a memory. The communication unit is an interface circuit of the apparatus, and is configured to receive a signal from another apparatus. For example, when the apparatus is implemented in a form of a chip, the communication unit is an interface circuit used by the chip to receive a signal from another chip or apparatus, or is an interface circuit used by the chip to send a signal to another chip or apparatus

The apparatus 700 may be the terminal device in any one of the foregoing embodiments, or may be a chip used in the terminal device. For example, when the apparatus 700 is the terminal device, the processing unit may be, for example, a processor, and the communication unit may be, for example, a transceiver. Optionally, the transceiver may include a radio frequency circuit, and the storage unit may be, for example, a memory. For example, when the apparatus 700 is the chip used for the terminal device, the processing unit may be, for example, a processor, and the communication unit may be, for example, an input/output interface, a pin, or a circuit. The processing unit may execute computer-executable instructions stored in the storage unit. Optionally, the storage unit is a storage unit inside the chip, such as a register or a buffer. Alternatively, the storage unit may be a storage unit that is inside the terminal device and that is located outside the chip, such as a read-only memory (read-only memory, ROM), another type of static storage device that can store static information and instructions, or a random access memory (random access memory, RAM).

In an embodiment, the communication unit 710 is configured to send a random access preamble on a first uplink carrier; the communication unit is further configured to receive first information, where the first information includes carrier indication information, the carrier indication information indicates a second uplink carrier used by a message 3 in a random access process, and the second uplink carrier is different from the first uplink carrier; and the communication unit is further configured to send the message 3 in the random access process on the second uplink carrier.

In a possible implementation, the first information is downlink control information DCI, and a format of the DCI is 0_0.

In a possible implementation, the first information is a random access response uplink grant.

In a possible implementation, the communication unit is further configured to: before receiving the first information, send previous transmission of the message 3 on a third uplink carrier, where the third uplink carrier is different from the first uplink carrier and/or the second uplink carrier.

In a possible implementation, the communication unit is further configured to: before receiving the first information, receive a random access response uplink grant, where the random access response uplink grant indicates the terminal device to send the message 3 on a third uplink carrier, and the third uplink carrier is different from the first uplink carrier and/or the second uplink carrier.

In a possible implementation, the first information is the downlink control information DCI, and the carrier indication information is the last m valid bits in the DCI format 0_0, where m is a positive integer, and m≥2; or the carrier indication information is the last n^{th} to (n-m)^{th} valid bits in the DCI format 0_0, where n≥2, m≥1, n>m, and n and m are positive integers. The valid bits do not include a zero filling bit in the DCI.

In a possible implementation, the communication unit is further configured to indicate, to a network device, that the terminal device supports the uplink carrier carrying the message 3 to be different from the first uplink carrier.

In a possible implementation, cell identifiers of serving cells in which the first uplink carrier and the second uplink carrier are located are the same; or the first uplink carrier and the second uplink carrier are configured by using SIB1.

In a possible implementation, cell identifiers of serving cells in which the first uplink carrier, the second uplink carrier, and the third uplink carrier are located are the same; or the first uplink carrier, the second uplink carrier, and the third uplink carrier are configured by using SIB1.

In an optional implementation, the terminal device skips sending uplink transmission on the first uplink carrier and the second uplink carrier within a predetermined time interval before a time point at which the message 3 is sent.

It may be understood that, for a specific implementation process and corresponding beneficial effects when the apparatus is used for the foregoing information sending method, refer to related descriptions in the foregoing method embodiment. Details are not described herein.

FIG. 8 is a possible example block diagram of an information receiving apparatus according to this application. The apparatus 800 may exist in a form of software or hardware. The apparatus 800 may include a communication unit 810. In an implementation, the communication unit 810 may include a receiving unit and a sending unit. The communication unit 810 is configured to support the apparatus 800 in communicating with another network entity. In some embodiments, the apparatus 800 may further include a processing unit 820 and/or a storage unit 830. The processing unit is configured to control an action of the apparatus 800, and the storage unit is configured to store program code and data of the apparatus 800.

The processing unit may be a processor or a controller, such as a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The storage unit may be a memory. The communication unit is an interface circuit of the apparatus, and is configured to receive a signal from another apparatus. For example, when the apparatus is implemented in a form of a chip, the communication unit is an interface circuit used by the chip to receive a signal from another chip or apparatus, or is an interface circuit used by the chip to send a signal to another chip or apparatus

The apparatus 800 may be the network device in any one of the foregoing embodiments, or may be a chip used in the network device. For example, when the apparatus 800 is the network device, the processing unit may be, for example, a processor, and the communication unit may be, for example, a transceiver. Optionally, the transceiver may include a radio frequency circuit, and the storage unit may be, for example, a memory. For example, when the apparatus 800 is the chip used for the network device, the processing unit may be, for example, a processor, and the communication unit may be, for example, an input/output interface, a pin, or a circuit. The processing unit may execute computer-executable instructions stored in the storage unit. Optionally, the storage unit is a storage unit inside the chip, such as a register or a buffer. Alternatively, the storage unit may be a storage unit that is inside the network device and that is located outside the chip, such as a read-only memory (read-only memory, ROM), another type of static storage device that can store static information and instructions, or a random access memory (random access memory, RAM).

In an embodiment, the communication unit 810 is configured to receive a random access preamble sent on a first uplink carrier; the communication unit 810 is further configured to send first information, where the first information includes carrier indication information, the carrier indication information indicates a second uplink carrier used by a message 3 in a random access process, and the second uplink carrier is different from the first uplink carrier; and the communication unit 810 is further configured to receive the message 3 that is in the random access process and that is sent on the second uplink carrier.

In a possible implementation, the first information is downlink control information DCI, and a format of the DCI is 0_0.

In a possible implementation, the first information is a random access response uplink grant.

In a possible implementation, the communication unit 810 is further configured to: before sending the first information, receive the message 3 sent on a third uplink carrier, where the third uplink carrier is different from the first uplink carrier and/or the second uplink carrier.

In a possible implementation, the communication unit 810 is further configured to: before sending the first information, send a random access response uplink grant to a terminal device. The random access response uplink grant indicates the terminal device to send the message 3 on a third uplink carrier, and the third uplink carrier is different from the first uplink carrier and/or the second uplink carrier.

In a possible implementation, the first information is the downlink control information DCI, and the carrier indication information is the last m valid bits in the DCI format 0_0, where m is a positive integer, and m≥2; or the carrier indication information is the last n^{th} to (n-m)^{th} valid bits in the DCI format 0_0, where n≥2, m≥1, n>m, and n and m are positive integers. The valid bits do not include a zero filling bit in the DCI.

In a possible implementation, the communication unit 810 is further configured to obtain an indication from the terminal device that the terminal device supports the second uplink carrier carrying the message 3 to be different from the first uplink carrier.

In a possible implementation, cell identifiers of serving cells in which the first uplink carrier and the second uplink carrier are located are the same; or the first uplink carrier and the second uplink carrier are configured by using SIB1.

In a possible implementation, cell identifiers of serving cells in which the first uplink carrier, the second uplink carrier, and the third uplink carrier are located are the same; or the first uplink carrier, the second uplink carrier, and the third uplink carrier are configured by using SIB1.

In an optional implementation, the terminal device skips sending uplink transmission on the first uplink carrier and the second uplink carrier within a predetermined time interval before a time point at which the message 3 is sent.

It may be understood that, for a specific implementation process and corresponding beneficial effects when the apparatus is used for the foregoing information receiving method, refer to related descriptions in the foregoing method embodiment. Details are not described herein.

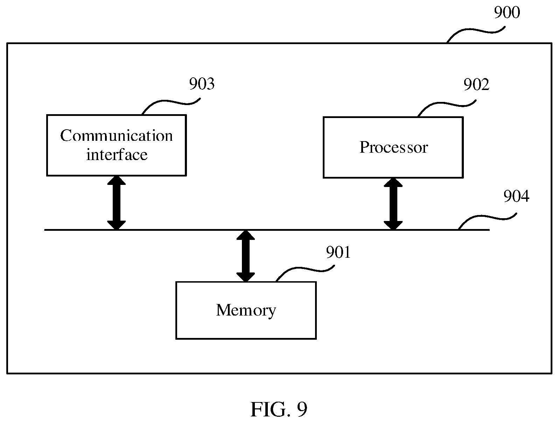

FIG. 9 is a schematic diagram of an apparatus according to this application. The apparatus may be the terminal device or the network device in the foregoing embodiments, or may be the information sending apparatus or the information receiving apparatus in the foregoing embodiments. The apparatus 900 includes a processor 902, a communication interface 903, and a memory 901. Optionally, the apparatus 900 may further include a communication line 904. The communication interface 903, the processor 902, and the memory 901 may be connected to each other by using the communication line 904. The communication line 904 may be a peripheral component interconnect (peripheral component interconnect, PCI for short) bus, an extended industry standard architecture (extended industry standard architecture, EISA for short) bus, or the like. The communication line 904 may be classified into an address bus, a data bus, a control bus, and the like. For ease of representation, only one thick line is used to represent the bus in FIG. 9, but this does not mean that there is only one bus or only one type of bus.

The processor 902 may be a CPU, a microprocessor, an ASIC, or one or more integrated circuits configured to control program execution in the solutions of this application.

The communication interface 903 is any apparatus such as a transceiver that is configured to communicate with another device or a communication network, such as an Ethernet, a radio access network (radio access network, RAN), a wireless local area network (wireless local area network, WLAN), or a wired access network.

The memory 901 may be a ROM, another type of static storage device that can store static information and instructions, a RAM, or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory 901 is not limited thereto. The memory may exist independently, and is connected to the processor by using the communication line 904. Alternatively, the memory may be integrated with the processor.

The memory 901 is configured to store computer-executable instructions for executing the solutions in this application, and the processor 902 controls the execution of the computer-executable instructions. The processor 902 is configured to execute the computer-executable instructions stored in the memory 901, to implement the information sending method and/or the information receiving method provided in the foregoing embodiments of this application.

Optionally, the computer-executable instructions in this embodiment of this application may also be referred to as application program code. This is not specifically limited in this embodiment of this application.

A person of ordinary skill in the art may understand that various numbers such as "first" and "second" in this application are merely used for differentiation for ease of description, and are not used to limit the scope of embodiments of this application or represent a sequence. The term "and/or" describes an association relationship between associated objects and represents that three relationships may exist. For example, A and/or B may represent the following three cases: Only A exists, both A and B exist, and only B exists. The character "/" generally represents an "or" relationship between associated objects. "At least one" means one or more. "At least two" means two or more. "At least one", "any one", or a similar expression thereof indicates any combination of the items, and includes a singular item (piece) or any combination of plural items (pieces). For example, at least one (piece, or type) of a, b, or c may represent: a, b, c, a and b, a and c, b and c, or a, b, and c, where a, b, and c may be singular or plural. The term "a plurality of" means two or more, and another quantifier is similar to this. In addition, an element (element) that appears in singular forms "a", "an", and "the" does not mean "one or only one" unless otherwise specified in the context, but means "one or more". For example, "a device" means one or more such devices.

All or a part of the foregoing embodiments may be implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The various illustrative logical units and circuits in embodiments of this application may implement or operate the functions via a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to a processor, so that the processor may read information from the storage medium and write information to the storage medium. Optionally, the storage medium may be integrated into a processor. The processor and the storage medium may be disposed in the ASIC.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

## Claims

1. An information sending method, wherein the method comprises:
sending (S403), by a terminal device (230), a random access preamble on a first uplink carrier;
receiving (S404), by the terminal device (230), first information, wherein the first information comprises carrier indication information, the carrier indication information indicates a second uplink carrier used by a message 3 in a random access process;
sending (S405), by the terminal device (230), the message 3 in the random access process on the second uplink carrier,
**characterised in that**
the terminal device (230) indicates capability information of the terminal device to the network device and the network device configures the carrier indication information and the first information for the terminal device based on the capability information of the terminal device, to schedule uplink transmission of the message 3 in the random access process,
wherein if the terminal device (230) does not have a carrier switching capability in the random access process, the second uplink carrier indicated by the carrier indication information carried in the first information is the same as the first uplink carrier used by the terminal device to send the random access preamble, and
if the terminal device (230) has a carrier switching capability in the random access process, the second uplink carrier indicated by the carrier indication information carried in the first information is different from the first uplink carrier used by the terminal device to send the random access preamble.

2. The method according to claim 1, wherein
the first information is downlink control information, DCI, and a format of the DCI is 0_0.

3. The method according to claim 1, wherein
the first information is a random access response uplink grant.

4. The method according to claim 1 or 2, wherein before the receiving, by the terminal device (230), first information, the method further comprises:
sending, by the terminal device (230), previous transmission of the message 3 on a third uplink carrier, wherein the third uplink carrier is different from the first uplink carrier and/or the second uplink carrier.

5. The method according to claim 1 or 2, wherein before the receiving, by the terminal device (230), first information, the method further comprises:
receiving, by the terminal device (230), a random access response uplink grant, wherein the random access response uplink grant indicates the terminal device (230) to send the message 3 on a third uplink carrier, and the third uplink carrier is different from the first uplink carrier and/or the second uplink carrier.

6. The method according to claim 4 or 5, wherein the first information is the downlink control information DCI, and
the carrier indication information is the last m valid bits in the DCI format 0_0, wherein m is a positive integer, and m≥2; or
the carrier indication information is the last n^{th} to (n-m)^{th} valid bits in the DCI format 0_0, wherein n≥2, m≥1, n>m, and n and m are positive integers; and the valid bits do not comprise a zero filling bit in the DCI.

7. The method according to any one of claims 1 to 6, wherein the method further comprises:
indicating, by the terminal device (230) to a network device (210, 220), that the terminal device (230) supports the uplink carrier carrying the message 3 to be different from the first uplink carrier.

8. An information receiving method, wherein the method comprises:
receiving (S403), by a network device (210, 220), a random access preamble sent on a first uplink carrier;
sending (S404), by the network device (210, 220), first information, wherein the first information comprises carrier indication information, the carrier indication information indicates a second uplink carrier used by a message 3 in a random access process;
receiving (S405), by the network device (210, 220), the message 3 that is in the random access process and that is sent on the second uplink carrier;
**characterised in that**
the terminal device (230) indicates capability information of the terminal device to the network device and the network device configures the carrier indication information and the first information for the terminal device based on the capability information of the terminal device, to schedule uplink transmission of the message 3 in the random access process,
wherein if the terminal device (230) does not have a carrier switching capability in the random access process, the second uplink carrier indicated by the carrier indication information carried in the first information is the same as the first uplink carrier used by the terminal device to send the random access preamble, and
if the terminal device (230) has a carrier switching capability in the random access process, the second uplink carrier indicated by the carrier indication information carried in the first information is different from the first uplink carrier used by the terminal device to send the random access preamble.

9. The method according to claim 8, wherein
the first information is downlink control information DCI, and a format of the DCI is 0_0.

10. The method according to claim 8, wherein
the first information is a random access response uplink grant.

11. The method according to claim 8 or 9, wherein before the sending, by the network device (210, 220), first information, the method further comprises:
receiving, by the network device (210, 220), the message 3 sent on a third uplink carrier, wherein the third uplink carrier is different from the first uplink carrier and/or the second uplink carrier.

12. The method according to claim 8 or 9, wherein before the sending, by the network device (210, 220), first information, the method further comprises:
sending, by the network device (210, 220), a random access response uplink grant to a terminal device (230), wherein the random access response uplink grant indicates the terminal device (230) to send the message 3 on a third uplink carrier, and the third uplink carrier is different from the first uplink carrier and/or the second uplink carrier.

13. The method according to claim 11 or 12, wherein the first information is the downlink control information DCI, and
the carrier indication information is the last m valid bits in the DCI format 0_0, wherein m is a positive integer, and m≥2; or
the carrier indication information is the last n^{th} to (n-m)^{th} valid bits in the DCI format 0_0, wherein n≥2, m≥1, n>m, and n and m are positive integers; and the valid bits do not comprise a zero filling bit in the DCI.

14. A terminal device, comprising a processor (902) and an interface circuit, wherein the processor (902) is configured to communicate with a network device (210, 220) by using the interface circuit, and perform the method according to any one of claims 1 to 7.

15. A network device, comprising a processor (902) and an interface circuit, wherein the processor (902) is configured to communicate with a terminal device (230) by using the interface circuit, and perform the method according to any one of claims 8 to 13.

## Patentansprüche

1. Informationssendeverfahren, wobei das Verfahren umfasst:
Senden (S403), durch ein Endgerät (230), einer Direktzugriffspräambel auf einem ersten Uplink-Träger;
Empfangen (S404), durch das Endgerät (230), von ersten Informationen, wobei die ersten Informationen Trägerangabeinformationen umfassen, wobei die Trägerangabeinformationen einen zweiten Uplink-Träger, der von einer Nachricht 3 in einem Direktzugriffsprozess verwendet wird, angeben;
Senden (S405), durch das Endgerät (230), der Nachricht 3 in dem Direktzugriffsprozess auf dem zweiten Uplink-Träger;
**dadurch gekennzeichnet, dass** das Endgerät (230) der Netzwerkvorrichtung Fähigkeitsinformationen des Endgeräts angibt und die Netzwerkvorrichtung die Trägerangabeinformationen und die ersten Informationen für das Endgerät basierend auf den Fähigkeitsinformationen des Endgeräts konfiguriert, um eine Uplink-Übertragung der Nachricht 3 in dem Direktzugriffsprozess zu planen, wobei, falls das Endgerät (230) keine Trägerumschaltfähigkeit in dem Direktzugriffsprozess aufweist, der zweite Uplink-Träger, der durch die Trägerangabeinformationen, die in den ersten Informationen getragen werden, angegeben wird, gleich dem ersten Uplink-Träger ist, der von dem Endgerät verwendet wird, um die Direktzugriffspräambel zu senden, und
falls das Endgerät (230) eine Trägerumschaltfähigkeit in dem Direktzugriffsprozess aufweist, der zweite Uplink-Träger, der durch die Trägerangabeinformationen, die in den ersten Informationen getragen werden, angegeben wird, sich von dem ersten Uplink-Träger unterscheidet, der von dem Endgerät verwendet wird, um die Direktzugriffspräambel zu senden.

2. Verfahren nach Anspruch 1, wobei
die ersten Informationen Downlink-Steuerinformationen, DCI, sind und ein Format der DCI 0_0 ist.

3. Verfahren nach Anspruch 1, wobei
die ersten Informationen eine Direktzugriffsantwort-Uplink-Genehmigung sind.

4. Verfahren nach Anspruch 1 oder 2, wobei vor dem Empfangen, durch das Endgerät (230), von ersten Informationen, das Verfahren ferner umfasst:
Senden, durch das Endgerät (230), einer vorherigen Übertragung der Nachricht 3 auf einem dritten Uplink-Träger, wobei sich der dritte Uplink-Träger von dem ersten Uplink-Träger und/oder dem zweiten Uplink-Träger unterscheidet.

5. Verfahren nach Anspruch 1 oder 2, wobei vor dem Empfangen, durch das Endgerät (230), von ersten Informationen, das Verfahren ferner umfasst:
Empfangen, durch das Endgerät (230), einer Direktzugriffsantwort-Uplink-Genehmigung, wobei die Direktzugriffsantwort-Uplink-Genehmigung dem Endgerät (230) angibt, die Nachricht 3 auf einem dritten Uplink-Träger zu senden, und sich der dritte Uplink-Träger von dem ersten Uplink-Träger und/oder dem zweiten Uplink-Träger unterscheidet.

6. Verfahren nach Anspruch 4 oder 5, wobei die ersten Informationen die Downlink-Steuerinformationen, DCI, sind und
die Trägerangabeinformationen die letzten m gültigen Bits in dem DCI-Format 0_0 sind, wobei m eine positive ganze Zahl ist und m≥2; oder
die Trägerangabeinformationen die letzten n^{-ten} bis (n-m)^{-ten} gültigen Bits in dem DCI-Format 0_0 sind, wobei n≥2, m≥1, n>m und n und m positive ganze Zahlen sind; und die gültigen Bits kein Nullfüllbit in den DCI umfassen.

7. Verfahren nach einem der Ansprüche 1 bis 6, wobei das Verfahren ferner umfasst: Angeben, durch das Endgerät (230) an eine Netzwerkvorrichtung (210, 220), dass das Endgerät (230) unterstützt, dass der Uplink-Träger, der die Nachricht 3 trägt, sich von dem ersten Uplink-Träger unterscheidet.

8. Informationsempfangsverfahren, wobei das Verfahren umfasst:
Empfangen (S403), durch eine Netzwerkvorrichtung (210, 220), einer auf einem ersten Uplink-Träger gesendeten Direktzugriffspräambel;
Senden (S404), durch die Netzwerkvorrichtung (210, 220), von ersten Informationen, wobei die ersten Informationen Trägerangabeinformationen umfassen, wobei die Trägerangabeinformationen einen zweiten Uplink-Träger, der von einer Nachricht 3 in einem Direktzugriffsprozess verwendet wird, angeben;
Empfangen (S405), durch die Netzwerkvorrichtung (210, 220), der Nachricht 3, die sich in dem Direktzugriffsprozess befindet und die auf dem zweiten Uplink-Träger gesendet wird;
**dadurch gekennzeichnet, dass** das Endgerät (230) der Netzwerkvorrichtung Fähigkeitsinformationen des Endgeräts angibt und die Netzwerkvorrichtung die Trägerangabeinformationen und die ersten Informationen für das Endgerät basierend auf den Fähigkeitsinformationen des Endgeräts konfiguriert, um die Uplink-Übertragung der Nachricht 3 in dem Direktzugriffsprozess zu planen, wobei, falls das Endgerät (230) keine Trägerumschaltfähigkeit in dem Direktzugriffsprozess aufweist, der zweite Uplink-Träger, der durch die Trägerangabeinformationen, die in den ersten Informationen getragen werden,
angegeben wird, gleich dem ersten Uplink-Träger ist, der von dem Endgerät verwendet wird, um die Direktzugriffspräambel zu senden, und
falls das Endgerät (230) eine Trägerumschaltfähigkeit in dem Direktzugriffsprozess aufweist, der zweite Uplink-Träger, der durch die Trägerangabeinformationen, die in den ersten Informationen getragen werden, angegeben wird, sich von dem ersten Uplink-Träger unterscheidet, der von dem Endgerät verwendet wird, um die Direktzugriffspräambel zu senden.

9. Verfahren nach Anspruch 8, wobei
die ersten Informationen Downlink-Steuerinformationen, DCI, sind und ein Format der DCI 0_0 ist.

10. Verfahren nach Anspruch 8, wobei
die ersten Informationen eine Direktzugriffsantwort-Uplink-Genehmigung sind.

11. Verfahren nach Anspruch 8 oder 9, wobei vor dem Senden, durch die Netzwerkvorrichtung (210, 220), von ersten Informationen, das Verfahren ferner umfasst:
Empfangen, durch die Netzwerkvorrichtung (210, 220), der Nachricht 3, die auf einem dritten Uplink-Träger gesendet wird, wobei sich der dritte Uplink-Träger von dem ersten Uplink-Träger und/oder dem zweiten Uplink-Träger unterscheidet.

12. Verfahren nach Anspruch 8 oder 9, wobei vor dem Senden, durch die Netzwerkvorrichtung (210, 220), von ersten Informationen, das Verfahren ferner umfasst:
Senden, durch die Netzwerkvorrichtung (210, 220), einer Direktzugriffsantwort-Uplink-Genehmigung an ein Endgerät (230), wobei die Direktzugriffsantwort-Uplink-Genehmigung dem Endgerät (230) angibt, die Nachricht 3 auf einem dritten Uplink-Träger zu senden, und sich der dritte Uplink-Träger von dem ersten Uplink-Träger und/oder dem zweiten Uplink-Träger unterscheidet.

13. Verfahren nach Anspruch 11 oder 12, wobei die ersten Informationen die Downlink-Steuerinformationen, DCI, sind und
die Trägerangabeinformationen die letzten m gültigen Bits in dem DCI-Format 0_0 sind, wobei m eine positive ganze Zahl ist und m≥2; oder
die Trägerangabeinformationen die letzten n^{-ten} bis (n-m)^{-ten} gültigen Bits in dem DCI-Format 0_0 sind, wobei n≥2, m≥1, n>m und n und m positive ganze Zahlen sind; und die gültigen Bits kein Nullfüllbit in den DCI umfassen.

14. Endgerät, das einen Prozessor (902) und eine Schnittstellenschaltung umfasst, wobei der Prozessor (902) konfiguriert ist, um durch Verwenden der Schnittstellenschaltung mit einer Netzwerkvorrichtung (210, 220) zu kommunizieren und das Verfahren nach einem der Ansprüche 1 bis 7 durchzuführen.

15. Netzwerkvorrichtung, die einen Prozessor (902) und eine Schnittstellenschaltung umfasst, wobei der Prozessor (902) konfiguriert ist, um durch Verwenden der Schnittstellenschaltung mit einem Endgerät (230) zu kommunizieren und das Verfahren nach einem der Ansprüche 8 bis 13 durchzuführen.

## Revendications

1. Procédé d'envoi d'informations, dans lequel le procédé comprend :
l'envoi (S403), par un dispositif terminal (230), d'un préambule d'accès aléatoire sur une première porteuse de liaison montante ;
la réception (S404), par le dispositif terminal (230), de premières informations, dans lequel les premières informations comprennent des informations d'indication de porteuse, les informations d'indication de porteuse indiquent une deuxième porteuse de liaison montante utilisée par un message 3 dans un processus d'accès aléatoire ; l'envoi (S405), par le dispositif terminal (230), du message 3 dans le processus d'accès aléatoire sur la deuxième porteuse de liaison montante ;
**caractérisé en ce que** le dispositif terminal (230) indique des informations de capacité du dispositif terminal au dispositif de réseau et le dispositif de réseau configure les informations d'indication de porteuse et les premières informations pour le dispositif terminal sur la base des informations de capacité du dispositif terminal, pour programmer une transmission de liaison montante du message 3 dans le processus d'accès aléatoire,
dans lequel, si le dispositif terminal (230) n'a pas de capacité de commutation de porteuse dans le processus d'accès aléatoire, la deuxième porteuse de liaison montante indiquée par les informations d'indication de porteuse transportées dans les premières informations est la même que la première porteuse de liaison montante utilisée par le dispositif terminal pour envoyer le préambule d'accès aléatoire, et
si le dispositif terminal (230) a une capacité de commutation de porteuse dans le processus d'accès aléatoire, la deuxième porteuse de liaison montante indiquée par les informations d'indication de porteuse transportées dans les premières informations est différente de la première porteuse de liaison montante utilisée par le dispositif terminal pour envoyer le préambule d'accès aléatoire.

2. Procédé selon la revendication 1, dans lequel
les premières informations sont des informations de commande de liaison descendante, DCI, et un format des DCI est 0_0.

3. Procédé selon la revendication 1, dans lequel
les premières informations sont un octroi de liaison montante de réponse d'accès aléatoire.

4. Procédé selon la revendication 1 ou 2, dans lequel avant la réception, par le dispositif terminal (230), de premières informations, le procédé comprend en outre :
l'envoi, par le dispositif terminal (230), d'une transmission précédente du message 3 sur une troisième porteuse de liaison montante, dans lequel la troisième porteuse de liaison montante est différente de la première porteuse de liaison montante et/ou de la deuxième porteuse de liaison montante.

5. Procédé selon la revendication 1 ou 2, dans lequel avant la réception, par le dispositif terminal (230), de premières informations, le procédé comprend en outre :
la réception, par le dispositif terminal (230), d'un octroi de liaison montante de réponse d'accès aléatoire, dans lequel l'octroi de liaison montante de réponse d'accès aléatoire indique au dispositif terminal (230) d'envoyer le message 3 sur une troisième porteuse de liaison montante, et la troisième porteuse de liaison montante est différente de la première porteuse de liaison montante et/ou de la deuxième porteuse de liaison montante.

6. Procédé selon la revendication 4 ou 5, dans lequel les premières informations sont les informations de commande de liaison descendante, DCI, et
les informations d'indication de porteuse sont les m derniers bits valides dans le format DCI 0_0, dans lequel m est un entier positif, et m ≥ 2 ; ou
les informations d'indication de porteuse sont les n^{ième} à (n-m)^{ième} bits valides dans le format DCI 0_0, dans lequel n ≥ 2, m ≥ 1, n > m, et n et m sont des entiers positifs ; et les bits valides ne comprennent pas de bit de remplissage par zéro dans les DCI.

7. Procédé selon l'une quelconque des revendications 1 à 6, dans lequel le procédé comprend en outre :
l'indication, par le dispositif terminal (230) à un dispositif de réseau (210, 220), que le dispositif terminal (230) prend en charge la porteuse de liaison montante transportant le message 3 pour être différente de la première porteuse de liaison montante.

8. Procédé de réception d'informations, dans lequel le procédé comprend :
la réception (S403), par un dispositif de réseau (210, 220), d'un préambule d'accès aléatoire envoyé sur une première porteuse de liaison montante ;
l'envoi (S404), par le dispositif de réseau (210, 220), de premières informations, dans lequel les premières informations comprennent des informations d'indication de porteuse, les informations d'indication de porteuse indiquent une deuxième porteuse de liaison montante utilisée par un message 3 dans un processus d'accès aléatoire ;
la réception (S405), par le dispositif de réseau (210, 220), du message 3 qui est dans le processus d'accès aléatoire et qui est envoyé sur la deuxième porteuse de liaison montante ;
**caractérisé en ce que** le dispositif terminal (230) indique des informations de capacité du dispositif terminal au dispositif de réseau et le dispositif de réseau configure les informations d'indication de porteuse et les premières informations pour le dispositif terminal sur la base des informations de capacité du dispositif terminal, pour programmer une transmission de liaison montante du message 3 dans le processus d'accès aléatoire,
dans lequel, si le dispositif terminal (230) n'a pas de capacité de commutation de porteuse dans le processus d'accès aléatoire, la deuxième porteuse de liaison montante indiquée par les informations d'indication de porteuse transportées dans les premières informations est la même que la première porteuse de liaison montante utilisée par le dispositif terminal pour envoyer le préambule d'accès aléatoire, et
si le dispositif terminal (230) a une capacité de commutation de porteuse dans le processus d'accès aléatoire, la deuxième porteuse de liaison montante indiquée par les informations d'indication de porteuse transportées dans les premières informations est différente de la première porteuse de liaison montante utilisée par le dispositif terminal pour envoyer le préambule d'accès aléatoire.

9. Procédé selon la revendication 8, dans lequel
les premières informations sont des informations de commande de liaison descendante, DCI, et un format des DCI est 0_0.

10. Procédé selon la revendication 8, dans lequel
les premières informations sont un octroi de liaison montante de réponse d'accès aléatoire.

11. Procédé selon la revendication 8 ou 9, dans lequel avant l'envoi, par le dispositif de réseau (210, 220), de premières informations, le procédé comprend en outre :
la réception, par le dispositif de réseau (210, 220), du message 3 envoyé sur une troisième porteuse de liaison montante, dans lequel la troisième porteuse de liaison montante est différente de la première porteuse de liaison montante et/ou de la deuxième porteuse de liaison montante.

12. Procédé selon la revendication 8 ou 9, dans lequel avant l'envoi, par le dispositif de réseau (210, 220), de premières informations, le procédé comprend en outre :
l'envoi, par le dispositif de réseau (210, 220), d'un octroi de liaison montante de réponse d'accès aléatoire à un dispositif terminal (230), dans lequel l'octroi de liaison montante de réponse d'accès aléatoire indique au dispositif terminal (230) d'envoyer le message 3 sur une troisième porteuse de liaison montante, et la troisième porteuse de liaison montante est différente de la première porteuse de liaison montante et/ou de la deuxième porteuse de liaison montante.

13. Procédé selon la revendication 11 ou 12, dans lequel les premières informations sont les informations de commande de liaison descendante, DCI, et
les informations d'indication de porteuse sont les m derniers bits valides dans le format DCI 0_0, dans lequel m est un entier positif, et m ≥ 2 ; ou
les informations d'indication de porteuse sont les n^{ième} à (n-m)^{ième} bits valides dans le format DCI 0_0, dans lequel n ≥ 2, m ≥ 1, n > m, et n et m sont des entiers positifs ; et les bits valides ne comprennent pas de bit de remplissage par zéro dans les DCI.

14. Dispositif terminal, comprenant un processeur (902) et un circuit d'interface, dans lequel le processeur (902) est configuré pour communiquer avec un dispositif de réseau (210, 220) en utilisant le circuit d'interface, et effectuer le procédé selon l'une quelconque des revendications 1 à 7.

15. Dispositif de réseau, comprenant un processeur (902) et un circuit d'interface, dans lequel le processeur (902) est configuré pour communiquer avec un dispositif terminal (230) en utilisant le circuit d'interface, et effectuer le procédé selon l'une quelconque des revendications 8 à 13.
